# EUROPEAN PATENT APPLICATION

(11) **EP 3 664 557 A1**
(43) Date of publication of application: **10.06.2020**
(21) Application number: 18843503.6
(22) Date of filing: 10.08.2018
(51) Int. Cl.: H04W 72/12

(54) **DATA TRANSMISSION METHOD, NETWORK DEVICE AND TERMINAL DEVICE**

(30) Priority: 11.08.2017 CN 201710687932
(71) Applicant: Huawei Technologies Co., Ltd., Longgang District Shenzhen, Guangdong 518129 (CN)
(72) Inventor: FENG, Shulan, Shenzhen Guangdong 518129 (CN)
(74) Representative: Körber, Martin Hans
(86) International application number: PCT/CN2018/099920
(87) International publication number: WO 2019/029693

(57) **Abstract**

Embodiments of this application disclose a data transmission method, a network device, and a terminal device. In the method, a first network device sends first downlink data to a first terminal device in a first time period in a first time unit, the first network device receives, in a second time period in the first time unit, a feedback signal sent by the first terminal device, and the first network device determines a third time period from the first time unit. A start point of the third time period is an end time of the first time period, and an end point of the third time period is a start time of the second time period; and the third time period may be divided into at least one of the following time periods: a fourth time period, a fifth time period, and a sixth time period. The first network device may perform uplink transmission and downlink transmission or keep silent in the time periods in the third time period, so that the first network device can transmit data in the fourth time period or the fifth time period. In this way, spectrum resource utilization is improved.

## Description

This application claims priority to Chinese Patent Application No. 201710687932.1, filed with the Chinese Patent Office on August 11, 2017 and entitled "DATA TRANSMISSION METHOD, NETWORK DEVICE, AND TERMINAL DEVICE", which is incorporated herein by reference in its entirety.

### TECHNICAL FIELD

This application relates to the field of communications technologies, and in particular, to a data transmission method, a network device, and a terminal device.

### BACKGROUND

In a next-generation wireless communications system, for example, a new radio (New Radio, NR) access network, to reduce a communication latency and improve user experience, a plurality of latency reduction manners are proposed.

An implementation of reducing a communication latency is a self-contained operation mode (Self-Contained Operation Mode). In this mode, downlink signal transmission is used as an example. A base station sends downlink data in a slot, and the base station receives, in the slot, a feedback signal sent by a terminal. The base station may carry downlink control signaling by using a physical downlink control channel (Physical Downlink Control Channel, PDCCH), and the base station carries the downlink data by using a physical downlink shared channel (Physical Downlink Shared Channel, PDSCH). Generally, scheduling information of a PDSCH is indicated in a PDCCH in a current slot, and certainly, indication across slots is not excluded. One slot usually includes 14 orthogonal frequency division multiplexing (Orthogonal Frequency Division Multiplexing, OFDM) symbols. Among the 14 OFDM symbols, three symbols may be used to carry a PDCCH, six symbols may be used to carry a PDSCH, three symbols may be spared for a terminal device to process the downlink data, one symbol may be used for air-interface transmission, and the last symbol is used to carry a feedback signal.

Based on a subframe structure described in the prior art, the base station needs to spare a time of a plurality of OFDM symbols for a terminal device to process downlink data. Consequently, spectrum resources are severely wasted, and spectrum resource utilization is reduced.

### SUMMARY

Embodiments of this application provide a data transmission method, a network device, and a terminal device, to improve spectrum resource utilization.

To resolve the foregoing problem, the embodiments of this application provide the following technical solutions:

According to a first aspect, an embodiment of this application provides a data transmission method, including: determining, by a first network device, to send first downlink data to a first terminal device in a first time period in a first time unit, and receiving, in a second time period in the first time unit, a feedback signal of the first terminal device in response to a status of receiving the first downlink data; sending, by the first network device, first signaling to the first terminal device, where the first signaling is used to indicate that the first network device sends the first downlink data in the first time period in the first time unit, and receives the feedback signal in the second time period in the first time unit; determining, by the first network device, a third time period from the first time unit, where a start point of the third time period is an end time of the first time period, and an end point of the third time period is a start time of the second time period; and performing, by the first network device, at least one of the following operations:
sending, by the first network device, second signaling to a target device, where the second signaling indicates that the first network device sends a first target signal in a fourth time period in the third time period; sending, by the first network device, third signaling to a target device, where the third signaling indicates that the first network device receives, in a fifth time period in the third time period, a second target signal sent by the target device; or sending, by the first network device, fourth signaling to the target device, where the fourth signaling indicates that the first network device does not send any signal in a sixth time period in the third time period, and that the first network device does not configure a terminal device served by the first network device to send any signal in the sixth time period. The third time period includes at least one of the following time periods: the fourth time period, the fifth time period, and the sixth time period; the target device includes at least one of the following devices: the first terminal device, a second terminal device, and a second network device; the first network device provides a communications service for the second terminal device and the first terminal device; and the second network device is a neighboring network device of the first network device.

In this embodiment of this application, the first network device sends the first downlink data to the first terminal device in the first time period in the first time unit, the first network device receives, in the second time period in the first time unit, the feedback signal sent by the first terminal device, and the first network device determines the third time period from the first time unit. The start point of the third time period is the end time of the first time period, and the end point of the third time period is the start time of the second time period; and the third time period may be divided into at least one of the following time periods: the fourth time period, the fifth time period, and the sixth time period. The first network device may perform uplink transmission and downlink transmission or keep silent in the time periods in the third time period, so that the first network device can transmit data in the fourth time period or the fifth time period. In this way, spectrum resource utilization is improved.

According to a second aspect, an embodiment of this application provides a data transmission method, including: sending, by a first network device, first signaling to a first terminal device in a first time period in a first time unit, where the first signaling indicates that the first network device receives first uplink data in a second time period in the first time unit; determining, by the first network device, a third time period from the first time unit, where a start point of the third time period is an end time of the first time period, and an end point of the third time period is a start time of the second time period; and performing, by the first network device, at least one of the following operations:
sending, by the first network device, second signaling to a target device, where the second signaling indicates that the first network device sends a first target signal in a fourth time period in the third time period; sending, by the first network device, third signaling to a target device, where the third signaling indicates that the first network device receives, in a fifth time period in the third time period, a second target signal sent by the target device; or sending, by the first network device, fourth signaling to the target device, where the fourth signaling indicates that the first network device does not send any signal in a sixth time period in the third time period, and that the first network device does not configure a terminal device served by the first network device to send any signal in the sixth time period. The third time period includes at least one of the following time periods: the fourth time period, the fifth time period, and the sixth time period; the target device includes at least one of the following devices: the first terminal device, a second terminal device, and a second network device; the first network device provides a communications service for the second terminal device and the first terminal device; and the second network device is a neighboring network device of the first network device.

In this embodiment of this application, the first network device may instruct the first terminal device to send the first signaling in the first time period in the first time unit, the first network device may further receive, in the second time period in the first time unit, the first uplink data sent by the first terminal device, and the first network device determines the third time period from the first time unit. The start point of the third time period is the end time of the first time period, and the end point of the third time period is the start time of the second time period; and the third time period may be divided into at least one of the following time periods: the fourth time period, the fifth time period, and the sixth time period. The first network device may perform uplink transmission and downlink transmission or keep silent in the time periods in the third time period, so that the first network device can transmit data in the fourth time period or the fifth time period. In this way, spectrum resource utilization is improved.

In a possible design of first aspect, the determining, by the first network device, a third time period from the first time unit includes: determining the third time period based on a downlink processing time period for processing the first downlink data by the first terminal device. In this embodiment of this application, the third time period may be determined by using the downlink processing time period for processing the first downlink data by the first terminal device. In this case, the first network device may perform uplink transmission and downlink transmission or keep silent when the first terminal device processes the first downlink data. In this way, spectrum resource utilization can be improved.

In a possible design of the second aspect, the determining, by the first network device, a third time period from the first time unit includes: determining, by the first network device, the third time period based on an uplink processing time period for processing the first uplink data by the first terminal device. In this embodiment of this application, the third time period may be determined by using the downlink processing time period for processing the first uplink data by the first terminal device. In this case, the first network device may perform uplink transmission and downlink transmission or keep silent when the first terminal device processes the first uplink data. In this way, spectrum resource utilization can be improved.

In a possible design of the first aspect or the second aspect, the first time unit includes L symbols, the end time of the first time period is a k^{th} symbol in the L symbols, the start time of the second time period is a j^{th} symbol in the L symbols, and the third time period includes all symbols from a (k + 1)^{th} symbol to a (j - 1)^{th} symbol in the L symbols. The method further includes: when the fourth time period includes the (k + 1)^{th} symbol to a (k + X)^{th} symbol, sending, by the first network device in the (k + 1)^{th} symbol to the (k + X)^{th} symbol, a first target signal to the target device; when the fifth time period includes a (j - Y)^{th} symbol to the (j - 1)^{th} symbol, receiving, by the first network device in the (j - Y)^{th} symbol to the (j - 1)^{th} symbol, a second target signal sent by the target device; and/or when the sixth time period includes a (k + X + 1)^{th} symbol to a (j - Y - 1)^{th} symbol, skipping transmitting, by the first network device, any signal in the (k + X + 1)^{th} symbol to the (j - Y - 1)^{th} symbol, and skipping configuring, by the first network device in the (k + X + 1)^{th} symbol to the (j - Y - 1)^{th} symbol, a terminal device served by the first network device to send any signal. L, k, j, X, and Y all are non-negative integers, and j is greater than k.

In a possible design of the first aspect or the second aspect, the downlink processing time period is N1 symbols, and (j - k - 1) is greater than N1; or the uplink processing time period is N2 symbols, and (j - k - 1) is greater than N2. In this embodiment of this application, duration of the time periods in the third time period may be obtained by setting the downlink processing time period and the uplink processing time period.

In a possible design of the first aspect or the second aspect, X is equal to N1; Y is equal to N1; X is equal to N2; or Y is equal to N2. In this embodiment of this application, duration of the time periods in the third time period may be obtained by setting values of X and Y.

In a possible design of the first aspect or the second aspect, the first signaling includes: physical layer control signaling, semi-persistent scheduling SPS signaling, media access control MAC layer signaling, or higher layer signaling; the second signaling includes: physical layer control signaling, SPS signaling, MAC layer signaling, or higher layer signaling; the third signaling includes: physical layer control signaling, SPS signaling, MAC layer signaling, or higher layer signaling; or the fourth signaling includes: physical layer control signaling, SPS signaling, MAC layer signaling, higher layer signaling, or interface signaling between base stations. In this embodiment of this application, for all of the first signaling, the second signaling, the third signaling, and the fourth signaling, the network device may flexibly select frame structures and transmission modes of the signaling.

In a possible design of the first aspect or the second aspect, the method further includes: separately obtaining a parameter of a downlink control channel used to carry the first signaling, a parameter of a downlink shared channel used to carry the first downlink data, and a parameter of an uplink channel used to carry the feedback signal; and when the first time period, the second time period, the third time period, the fourth time period, the fifth time period, and the sixth time period are counted in a form of orthogonal frequency division multiplexing OFDM symbols, determining, by the first network device, duration of a single symbol that is in the first time unit, based on at least one of the following parameters: the parameter of the downlink control channel used to carry the first signaling, the parameter of the downlink shared channel used to carry the first downlink data, the parameter of the uplink channel used to carry the feedback signal, or a predefined reference parameter. In this embodiment of this application, the first network device may set the duration of the single symbol in the first time unit in the foregoing manner, so that duration of the time periods may be indicated based on the duration of the single symbol.

In a possible design of the first aspect or the second aspect, the determining, by the first network device, duration of a single symbol that is in the first time unit, based on at least one of the following parameters: the parameter of the downlink control channel used to carry the first signaling, the parameter of the downlink shared channel used to carry the first downlink data, the parameter of the uplink channel used to carry the feedback signal, or a predefined reference parameter, includes: when the parameter of the downlink control channel, the parameter of the downlink shared channel, and the parameter of the uplink channel include a same subcarrier spacing, using, by the first network device, duration of an orthogonal frequency division multiplexing OFDM symbol corresponding to the same subcarrier spacing as the duration of the single symbol in the first time unit; when the parameter of the downlink shared channel and the parameter of the uplink channel include different subcarrier spacings, determining, by the first network device, a maximum subcarrier spacing from the parameter of the downlink shared channel and the parameter of the uplink channel, and using, by the first network device, duration of an OFDM symbol corresponding to the maximum subcarrier spacing as the duration of the single symbol in the first time unit; when the parameter of the downlink shared channel and the parameter of the uplink channel include different subcarrier spacings, using, by the first network device, duration of an OFDM symbol corresponding to a subcarrier spacing of the downlink shared channel as the duration of the single symbol in the first time unit; when the parameter of the downlink shared channel and the parameter of the uplink channel include different subcarrier spacings, using, by the first network device, an OFDM symbol corresponding to the reference parameter as the duration of the single symbol in the first time unit; or when the parameter of the downlink shared channel and the parameter of the uplink channel include different subcarrier spacings, using, by the first network device, duration of an OFDM symbol corresponding to one subcarrier spacing in the parameter of the uplink channel as the duration of the single symbol in the first time unit.

In a possible design of the first aspect or the second aspect, the first target signal includes: a channel state information reference signal CSI-RS used for beam management, a CSI-RS used for channel quality feedback, a CSI-RS used for mobility management, a reference signal used for phase tracking, a reference signal used for time synchronization, and a reference signal used for frequency synchronization. In this embodiment of this application, the first target signal sent by the first network device may be implemented in a plurality of manners, and the first network device may select, based on an actual scenario, a specific signal that needs to be sent.

In a possible design of the first aspect or the second aspect, the first target signal includes: second downlink data sent to the second terminal device or third downlink data that is sent to the first terminal device and for which feedback does not need to be performed in the first time unit. In this embodiment of this application, the first target signal sent by the first network device may be implemented in a plurality of manners, and the first network device may select, based on an actual scenario, a specific signal that needs to be sent.

In a possible design of the first aspect or the second aspect, the second target signal includes: an uplink signal that is sent by the target device and that is different from the feedback signal, or another uplink signal that is sent by the target device and that is different from the first uplink data. In this embodiment of this application, the second target signal received by the first network device may be implemented in a plurality of manners, and the first terminal device or the second terminal device may select, based on an actual scenario, a specific signal that needs to be sent.

In a possible design of the first aspect or the second aspect, the method further includes: when the first target signal is a CSI-RS, receiving, by the first network device in a seventh time period in a second time unit, channel quality feedback information from the target device in response to the CSI-RS. The second time unit is a time unit that is after the first time unit and that includes uplink and downlink switching, and the seventh time period is a time period that is in the second time unit and that is before an uplink feedback signal is sent. In this embodiment of this application, the first network device selects, as the second time unit, the time unit that is after the first time unit and that includes uplink and downlink switching, the first network device may select, from the second time unit as the fifth time period, the time period that is before the uplink feedback signal is transmitted, and the first network device receives, in the seventh time period in the second time unit, the channel quality feedback information sent by the first terminal device in response to the CSI-RS. The first network device may complete channel quality measurement by using the channel quality feedback information.

According to a third aspect, an embodiment of this application further provides a data transmission method, including: determining, by a first terminal device, a first time unit used to receive first downlink data; receiving, by the first terminal device, first signaling sent by a first network device, where the first signaling indicates that the first terminal device receives the first downlink data in a first time period in the first time unit, and sends a feedback signal in a second time period in the first time unit, and the feedback signal is a feedback signal of the first terminal device for a status of receiving the first downlink data; and determining, by the first terminal device, a third time period from the first time unit, where a start point of the third time period is an end time of the first time period, and an end point of the third time period is a start time of the second time period; and the third time period is greater than or equal to a downlink processing time period for processing the first downlink data by the first terminal device.

In this embodiment of this application, the first terminal device receives the first downlink data in the first time period in the first time unit, and sends the feedback signal in the second time period in the first time unit. The first terminal device may further perform uplink transmission and downlink transmission in the third time period indicated by the first network device, so that the first terminal device may transmit data in the fourth time period or the fifth time period. In this way, spectrum resource utilization can be improved.

According to a fourth aspect, an embodiment of this application further provides a data transmission method, including: determining, by a first terminal device, a first time unit used to send uplink data; receiving, by the first terminal device in a first time period in the first time unit, first signaling sent by a first network device, where the first signaling indicates that the first terminal device sends first uplink data in a second time period in the first time unit; and determining, by the first terminal device, a third time period in the first time unit, where a start point of the third time period is an end time of the first time period, and an end point of the third time period is a start time of the second time period; and the third time period is greater than or equal to an uplink processing time period for processing the first uplink data by the first terminal device.

In this embodiment of this application, the first terminal device receives the first downlink data in the first time period in the first time unit, and sends the feedback signal in the second time period in the first time unit. The first terminal device may further perform uplink transmission and downlink transmission in the third time period indicated by the first network device, so that the first terminal device may transmit data in the fourth time period or the fifth time period. In this way, spectrum resource utilization can be improved.

In a possible design of the third aspect or the fourth aspect, the first time unit includes L symbols, the end time of the first time period is a k^{th} symbol in the L symbols, the start time of the second time period is a j^{th} symbol in the L symbols, and the third time period includes all symbols from a (k + 1)^{th} symbol to a (j - 1)^{th} symbol in the L symbols; and L, k, and j all are non-negative integers, and j is greater than k.

According to a fifth aspect, an embodiment of this application further provides a data transmission method, including: determining, by a terminal device, a third time period in a first time unit, where the third time period is a time period in the first time unit; and performing, by the terminal device, at least one of the following operations: receiving, by the terminal device, second signaling sent by the first network device, and determining, based on the second signaling, that the terminal device receives a first target signal in a fourth time period in the third time period; receiving, by the terminal device, third signaling sent by the first network device, and determining, based on the third signaling, that the terminal device send a second target signal in a fifth time period in the third time period; or receiving, by the terminal device, fourth signaling sent by the first network device, and determining, based on the fourth signaling, that the first network device does not transmit any signal in a sixth time period in the third time period, and that the first network device does not configure a terminal device served by the first network device to send any signal in the sixth time period in the third time period. The third time period includes at least one of the following time periods: the fourth time period, the fifth time period, and the sixth time period.

In this embodiment of this application, the terminal device receives first downlink data in a first time period in the first time unit, and sends a feedback signal in a second time period in the first time unit. The terminal device may further perform uplink transmission and downlink transmission in the third time period indicated by the first network device. In this case, the terminal device may transmit data in the fourth time period or the fifth time period. This can improve spectrum resource utilization.

In a possible design of the fifth aspect, the first time unit includes L symbols, and the third time period includes all symbols from a (k + 1)^{th} symbol to a (j - 1)^{th} symbol in the L symbols. The method further includes: when the fourth time period includes the (k + 1)^{th} symbol to a (k + X)^{th} symbol, receiving, by the terminal device in the (k + 1)^{th} symbol to the (k + X)^{th} symbol, a first target signal sent by the first network device; and/or when the fifth time period includes a (j - Y)^{th} symbol to the (j - 1)^{th} symbol, sending, by the terminal device in the (j - Y)^{th} symbol to the (j - 1)^{th} symbol, a second target signal to the first network device. L, k, j, X, and Y all are non-negative integers, and j is greater than k.

According to a sixth aspect, an embodiment of this application further provides a data transmission method, including: receiving, by a second network device, fourth signaling sent by a first network device; determining, by the second network device based on the fourth signaling, that the first network device does not send any signal in a sixth time period in the first time unit, and that the first network device does not configure a terminal device served by the first network device to send any signal in the fourth time period; and performing, by the second network device, channel state measurement or data transmission in all or some time periods in the sixth time period.

In this embodiment of this application, the second network device may determine, based on the fourth signaling, that the first network device does not send any signal in the sixth time period in the first time unit. In this case, the second network device is not interfered with by a neighboring network device, and the second network device may perform channel state measurement or data transmission in all or some time periods in the sixth time period. This improves spectrum resource utilization.

In a possible design of the sixth aspect, the first time unit includes L symbols, and the sixth time period includes all symbols from a (k + 1)^{th} symbol to a (j - 1)^{th} symbol in the L symbols. The determining, by the second network device based on the fourth signaling, that the first network device does not send any signal in a sixth time period in the first time unit, and that the first network device does not configure a terminal device served by the first network device to send any signal in the fourth time period, includes: when the sixth time period includes a (k + X + 1)^{th} symbol to a (j - Y - 1)^{th} symbol, determining, by the second network device, that the first network device does not transmit any signal in the (k + X + 1)^{th} symbol to the (j - Y - 1)^{th} symbol, and that the first network device does not configure a terminal device served by the first network device to send any signal in the (k + X + 1)^{th} symbol to the (j - Y - 1)^{th} symbol. L, k, j, X, and Y all are non-negative integers, and j is greater than k.

According to a seventh aspect, an embodiment of this application further provides a network device. The network device is specifically a first network device. The first network device includes: a time period determining module, configured to: determine to send first downlink data to a first terminal device in a first time period in a first time unit, and receive, in a second time period in the first time unit, a feedback signal sent by the first terminal device in response to a status of receiving the first downlink data; and a sending module, configured to: send first signaling to the first terminal device, where the first signaling is used to indicate that the first network device sends the first downlink data in the first time period in the first time unit, and receives, in the second time period in the first time unit, the feedback signal sent by the first terminal in response to the first downlink data. The time period determining module is further configured to determine a third time period from the first time unit. A start point of the third time period is an end time of the first time period, and an end point of the third time period is a start time of the second time period. The sending module is further configured to perform at least one of the following steps:
sending second signaling to a target device, where the second signaling indicates that the first network device sends a first target signal in a fourth time period in the third time period; sending third signaling to a target device, where the third signaling indicates that the first network device receives, in a fifth time period in the third time period, a second target signal sent by the target device; or sending fourth signaling to a target device, where the fourth signaling indicates that the first network device does not send any signal in a sixth time period in the third time period, and that the first network device does not configure a terminal device served by the first network device to send any signal in the fourth time period. The third time period includes at least one of the following time periods: the fourth time period, the fifth time period, and the sixth time period; the target device includes at least one of the following devices: the first terminal device, a second terminal device, and a second network device; the first network device provides a communications service for the second terminal device and the first terminal device; and the second network device is a neighboring network device of the first network device.

In this embodiment of this application, the first network device sends the first downlink data to the first terminal device in the first time period in the first time unit, the first network device receives, in the second time period in the first time unit, the feedback signal sent by the first terminal device, and the first network device determines the third time period from the first time unit. The start point of the third time period is the end time of the first time period, and the end point of the third time period is the start time of the second time period; and the third time period may be divided into at least one of the following time periods: the fourth time period, the fifth time period, and the sixth time period. The first network device may perform uplink transmission and downlink transmission or keep silent in the time periods in the third time period, so that the first network device can transmit data in the fourth time period or the fifth time period. In this way, spectrum resource utilization is improved.

According to an eighth aspect, an embodiment of this application provides a network device. The network device is specifically a first network device. The first network device includes: a sending module, configured to send first signaling to a first terminal device in a first time period in a first time unit, where the first signaling indicates that the first network device receives first uplink data in a second time period in the first time unit; and a time period determining module, configured to determine a third time period from the first time unit, where a start point of the third time period is an end time of the first time period, and an end point of the third time period is a start time of the second time period. The sending module is further configured to perform at least one of the following operations:
sending second signaling to a target device, where the second signaling indicates that the first network device sends a first target signal in a fourth time period in the third time period; sending third signaling to a target device, where the third signaling indicates that the first network device receives, in a fifth time period in the third time period, a second target signal sent by the target device; or sending fourth signaling to a target device, where the fourth signaling indicates that the first network device does not send any signal in a sixth time period in the third time period, and that the first network device does not configure a terminal device served by the first network device to send any signal in the sixth time period. The third time period includes at least one of the following time periods: the fourth time period, the fifth time period, and the sixth time period; the target device includes at least one of the following devices: the first terminal device, a second terminal device, and a second network device; the first network device provides a communications service for the second terminal device and the first terminal device; and the second network device is a neighboring network device of the first network device.

In this embodiment of this application, the first network device may instruct the first terminal device to send the first signaling in the first time period in the first time unit, the first network device may further receive, in the second time period in the first time unit, the first uplink data sent by the first terminal device, and the first network device determines the third time period from the first time unit. The start point of the third time period is the end time of the first time period, and the end point of the third time period is the start time of the second time period; and the third time period may be divided into at least one of the following time periods: the fourth time period, the fifth time period, and the sixth time period. The first network device may perform uplink transmission and downlink transmission or keep silent in the time periods in the third time period, so that the first network device can transmit data in the fourth time period or the fifth time period. In this way, spectrum resource utilization is improved.

In a possible design of the seventh aspect, the time period determining module is specifically configured to determine the third time period based on a downlink processing time period for processing the first downlink data by the first terminal device. In this embodiment of this application, the third time period may be determined by using the downlink processing time period for processing the first downlink data by the first terminal device. In this case, the first network device may perform uplink transmission and downlink transmission or keep silent when the first terminal device processes the first downlink data. In this way, spectrum resource utilization can be improved.

In a possible design of the eighth aspect, the time period determining module is specifically configured to determine the third time period based on an uplink processing time period for processing the first uplink data by the first terminal device. In this embodiment of this application, the third time period may be determined by using the downlink processing time period for processing the first uplink data by the first terminal device. In this case, the first network device may perform uplink transmission and downlink transmission or keep silent when the first terminal device processes the first uplink data. In this way, spectrum resource utilization can be improved.

In a possible design of the seventh aspect or the eighth aspect, the first time unit includes L symbols, the end time of the first time period is a k^{th} symbol in the L symbols, the start time of the second time period is a j^{th} symbol in the L symbols, and the third time period includes all symbols from a (k + 1)^{th} symbol to a (j - 1)^{th} symbol in the L symbols. The first network device further includes: a first receiving module and a silence module. The sending module is further configured to: when the fourth time period includes the (k + 1)^{th} symbol to a (k + X)^{th} symbol, send, in the (k + 1)^{th} symbol to the (k + X)^{th} symbol, a first target signal to the target device; the first receiving module is configured to: when the fifth time period includes a (j - Y)^{th} symbol to the (j - 1)^{th} symbol, receive, in the (j - Y)^{th} symbol to the (j - 1)^{th} symbol, a second target signal sent by the target device; and/or the silence module is configured to: when the sixth time period includes a (k + X + 1)^{th} symbol to a (j - Y - 1)^{th} symbol, that the first network device does not transmit any signal in the (k + X + 1)^{th} symbol to the (j - Y - 1)^{th} symbol, and that the first network device does not configure a terminal device served by the first network device to send any signal in the (k + X + 1)^{th} symbol to the (j - Y - 1)^{th} symbol. L, k, j, X, and Y all are non-negative integers, and j is greater than k.

In a possible design of the seventh aspect or the eighth aspect, the downlink processing time period is N1 symbols, and (j - k - 1) is greater than N1; or the uplink processing time period is N2 symbols, and (j - k - 1) is greater than N2. In this embodiment of this application, duration of the time periods in the third time period may be obtained by setting the downlink processing time period and the uplink processing time period.

In a possible design of the seventh aspect or the eighth aspect, X is equal to N1; Y is equal to N1; X is equal to N2; or Y is equal to N2. In this embodiment of this application, duration of the time periods in the third time period may be obtained by setting values of X and Y.

In a possible design of the seventh aspect or the eighth aspect, the first signaling includes: physical layer control signaling, semi-persistent scheduling SPS signaling, media access control MAC layer signaling, or higher layer signaling; the second signaling includes: physical layer control signaling, SPS signaling, MAC layer signaling, or higher layer signaling; the third signaling includes: physical layer control signaling, SPS signaling, MAC layer signaling, or higher layer signaling; or the fourth signaling includes: physical layer control signaling, SPS signaling, MAC layer signaling, higher layer signaling, or interface signaling between base stations. In this embodiment of this application, for all of the first signaling, the second signaling, the third signaling, and the fourth signaling, the network device may flexibly select frame structures and transmission modes of the signaling.

In a possible design of the seventh aspect or the eighth aspect, the first network device further includes: a symbol duration determining module, configured to: separately obtain a parameter of a downlink control channel used to carry the first signaling, a parameter of a downlink shared channel used to carry the first downlink data, and a parameter of an uplink channel used to carry the feedback signal; and when the first time period, the second time period, the third time period, the fourth time period, the fifth time period, and the sixth time period are counted in a form of orthogonal frequency division multiplexing OFDM symbols, determine duration of a single symbol that is in the first time unit, based on at least one of the following parameters: the parameter of the downlink control channel used to carry the first signaling, the parameter of the downlink shared channel used to carry the first downlink data, the parameter of the uplink channel used to carry the feedback signal, or a predefined reference parameter. In this embodiment of this application, the first network device may set the duration of the single symbol in the first time unit in the foregoing manner, so that duration of the time periods may be indicated based on the duration of the single symbol.

In a possible design of the seventh aspect or the eighth aspect, the symbol duration determining module is specifically configured to: when the parameter of the downlink control channel, the parameter of the downlink shared channel, and the parameter of the uplink channel include a same subcarrier spacing, use duration of an orthogonal frequency division multiplexing OFDM symbol corresponding to the same subcarrier spacing as the duration of the single symbol in the first time unit; when the parameter of the downlink shared channel and the parameter of the uplink channel include different subcarrier spacings, determine a maximum subcarrier spacing from the parameter of the downlink shared channel and the parameter of the uplink channel, and use, by the first network device, duration of an OFDM symbol corresponding to the maximum subcarrier spacing as the duration of the single symbol in the first time unit; when the parameter of the downlink shared channel and the parameter of the uplink channel include different subcarrier spacings, use duration of an OFDM symbol corresponding to a subcarrier spacing of the downlink shared channel as the duration of the single symbol in the first time unit; when the parameter of the downlink shared channel and the parameter of the uplink channel include different subcarrier spacings, use an OFDM symbol corresponding to the reference parameter as the duration of the single symbol in the first time unit; or when the parameter of the downlink shared channel and the parameter of the uplink channel include different subcarrier spacings, use duration of an OFDM symbol corresponding to one subcarrier spacing in the parameter of the uplink channel as the duration of the single symbol in the first time unit.

In a possible design of the seventh aspect or the eighth aspect, the first target signal includes: a channel state information reference signal CSI-RS used for beam management, a CSI-RS used for channel quality feedback, a CSI-RS used for mobility management, a reference signal used for phase tracking, a reference signal used for time synchronization, and a reference signal used for frequency synchronization. In this embodiment of this application, the first target signal sent by the first network device may be implemented in a plurality of manners, and the first network device may select, based on an actual scenario, a specific signal that needs to be sent.

In a possible design of the seventh aspect or the eighth aspect, the first target signal includes: second downlink data sent to the second terminal device or third downlink data that is sent to the first terminal device and for which feedback does not need to be performed in the first time unit. In this embodiment of this application, the first target signal sent by the first network device may be implemented in a plurality of manners, and the first network device may select, based on an actual scenario, a specific signal that needs to be sent.

In a possible design of the seventh aspect or the eighth aspect, the second target signal includes: another uplink signal that is sent by the target device and that is different from the feedback signal, or another uplink signal that is sent by the target device and that is different from the first uplink data. In this embodiment of this application, the second target signal received by the first network device may be implemented in a plurality of manners, and the first terminal device or the second terminal device may select, based on an actual scenario, a specific signal that needs to be sent.

In a possible design of the seventh aspect or the eighth aspect, the first network device further includes a second receiving module. The second receiving module is further configured to: when the first target signal is a CSI-RS, receive, in a seventh time period in a second time unit, channel quality feedback information from the target device in response to the CSI-RS. The second time unit is a time unit that is after the first time unit and that includes uplink and downlink switching, and the seventh time period is a time period that is in the second time unit and that is before an uplink feedback signal is sent.

In the seventh or eighth aspect of this application, composition modules of the first network device may further perform the steps described in the first aspect, the second aspect, or the possible implementations. For details, refer to the descriptions in the first aspect, the second aspect, or the possible implementations.

According to a ninth aspect, an embodiment of this application further provides a terminal device. The terminal device is specifically a first terminal device. The first terminal device includes: a determining module, configured to determine a first time unit used to receive first downlink data; and a receiving module, configured to receive first signaling sent by a first network device, where the first signaling indicates that the first terminal receives, in a first time period in the first time unit, the first downlink data sent by the first network device, and sends, in a second time period in the first time unit, a feedback signal in response to the first downlink data. The determining module is configured to determine a third time period from the first time unit. A start point of the third time period is an end time of the first time period, and an end point of the third time period is a start time of the second time period; and the third time period is greater than or equal to a downlink processing time period for processing the first downlink data by the first terminal device.

In this embodiment of this application, the first terminal device receives the first downlink data in the first time period in the first time unit, and sends the feedback signal in the second time period in the first time unit. The first terminal device may further perform uplink transmission and downlink transmission in the third time period indicated by the first network device, so that the first terminal device may transmit data in the fourth time period or the fifth time period. In this way, spectrum resource utilization can be improved.

According to a tenth aspect, an embodiment of this application further provides a terminal device. The terminal device is specifically a first terminal device. The first terminal device includes: a determining module, configured to determine a first time unit used to send uplink data; and a receiving module, configured to receive, in a first time period in the first time unit, first signaling sent by a first network device, where the first signaling indicates that the first terminal device sends first uplink data in a second time period in the first time unit. The determining module is further configured to determine a third time period from the first time unit. A start point of the third time period is an end time of the first time period, and an end point of the third time period is a start time of the second time period; and the third time period is greater than or equal to an uplink processing time period for processing the first uplink data by the first terminal device.

In this embodiment of this application, the first terminal device receives the first downlink data in the first time period in the first time unit, and sends the feedback signal in the second time period in the first time unit. The first terminal device may further perform uplink transmission and downlink transmission in the third time period indicated by the first network device, so that the first terminal device may transmit data in the fourth time period or the fifth time period. In this way, spectrum resource utilization can be improved.

In a possible design of the tenth aspect, the first time unit includes L symbols, the end time of the first time period is a k^{th} symbol in the L symbols, the start time of the second time period is a j^{th} symbol in the L symbols, and the third time period includes all symbols from a (k + 1)^{th} symbol to a (j - 1)^{th} symbol in the L symbols. L, k, and j all are non-negative integers, and j is greater than k.

In the ninth or tenth aspect of this application, composition modules of the first terminal device may further perform the steps described in the third aspect, the fourth aspect, or the possible implementations. For details, refer to the descriptions in the third aspect, the fourth aspect, or the possible implementations.

According to an eleventh aspect, an embodiment of this application provides a terminal device. The terminal device includes: a determining module, configured to determine a third time period from a first time unit, where the third time period is a time period in the first time unit; and a first receiving module, configured to: receive second signaling sent by a first network device, and determine, based on the second signaling, that the first network device sends a first target signal in a fourth time period in the third time period; a second receiving module, configured to: receive third signaling sent by the first network device, and determine, based on the third signaling, that the terminal device sends a second target signal in a fifth time period in the third time period; or a third receiving module, configured to: receive fourth signaling sent by the first network device, and determine, based on the fourth signaling, that the first network device does not transmit any signal in a sixth time period in the third time period. The third time period includes at least one of the following time periods: the fourth time period, the fifth time period, and the sixth time period.

In this embodiment of this application, the terminal device receives first downlink data in the first time period in the first time unit, and sends a feedback signal in a second time period in the first time unit. The terminal device may further perform uplink transmission and downlink transmission in the third time period indicated by the first network device. In this case, the terminal device may transmit data in the fourth time period or the fifth time period. This can improve spectrum resource utilization.

In a possible design of the eleventh aspect, the first time unit includes L symbols, and the third time period includes all symbols from a (k + 1)^{th} symbol to a (j - 1)^{th} symbol in the L symbols. The terminal device further includes a fourth receiving module and a sending module. The fourth receiving module is configured to: when the fourth time period includes the (k + 1)^{th} symbol to a (k + X)^{th} symbol, receive, in the (k + 1)^{th} symbol to the (k + X)^{th} symbol, a first target signal sent by the first network device; and/or the sending module is configured to: when the fifth time period includes a (j - Y)^{th} symbol to the (j - 1)^{th} symbol, send the second target signal to the first network device in the (j - Y)^{th} symbol to the (j - 1)^{th} symbol. L, k, j, X, and Y all are non-negative integers, and j is greater than k.

According to a twelfth aspect, an embodiment of this application further provides a network device. The network device is specifically a second network device, and the second network device includes: a receiving module, configured to receive fourth signaling sent by a first network device; a determining module, configured to determine, based on the fourth signaling, that the first network device does not send any signal in a sixth time period in a first time unit, and that the first network device does not configure a terminal device served by the first network device to send any signal in the fourth time period; and a processing module, configured to perform channel state measurement or data transmission in all or some time periods in the sixth time period.

In this embodiment of this application, the second network device may determine, based on the fourth signaling, that the first network device does not send any signal in the sixth time period in the first time unit. In this case, the second network device is not interfered with by a neighboring network device, and the second network device may perform channel state measurement or data transmission in all or some time periods in the sixth time period. This improves spectrum resource utilization.

In a possible design of the twelfth aspect, the first time unit includes L symbols, and the sixth time period includes all symbols from a (k + 1)^{th} symbol to a (j - 1)^{th} symbol in the L symbols. The determining module is specifically configured to: when the sixth time period includes a (k + X + 1)^{th} symbol to a (j - Y - 1)^{th} symbol, determine that the first network device does not transmit any signal in the (k + X + 1)^{th} symbol to the (j - Y - 1)^{th} symbol, and that the first network device does not configure a terminal device served by the first network device to send any signal in the (k + X + 1)^{th} symbol to the (j - Y - 1)^{th} symbol. L, k, j, X, and Y all are non-negative integers, and j is greater than k.

According to a thirteen aspect, an embodiment of this application further provides a network device, including: a processor, a memory, a transmitter, and a receiver. The memory is configured to store data and an instruction of the receiver and the processor; and the processor is configured to execute the instruction in the memory, so that the terminal device performs the method according to any one of the first aspect, the second aspect, or the sixth aspect.

According to a fourteenth aspect, an embodiment of this application further provides a terminal device, including: a processor, a memory, a transmitter, and a receiver. The memory is configured to store data and an instruction of the receiver and the processor; and the processor is configured to execute the instruction in the memory, so that the terminal device performs the method according to any one of the third aspect, the fourth aspect, or the fifth aspect.

According to a fifteenth aspect, an embodiment of this application provides a communications apparatus. The communications apparatus may include an entity such as a terminal device or a chip. The communications apparatus includes a processor and a memory. The memory is configured to store an instruction. The processor is configured to execute the instruction in the memory, so that the communications apparatus performs the method according to any one of the first aspect to the sixth aspect.

According to a sixteenth aspect, a computer readable storage medium is provided. The computer readable storage medium stores an instruction, and when the instruction is run on a computer, the computer is enabled to perform the methods according to the foregoing aspects.

According to a seventeenth aspect, a computer program product including an instruction is provided. When the computer program product is run on a computer, the computer is enabled to perform the methods according to the foregoing aspects.

According to an eighteenth aspect, an embodiment of this application provides a chip system. The chip system includes a processor, configured to support a terminal device or a network device in implementing the methods according to the aspects, for example, generating or processing data and/or information in the foregoing methods. In a possible design, the chip system further includes a memory. The memory is configured to save program instructions and data that are necessary for the terminal device or the network device. The chip system may include a chip, or may include a chip and another discrete device.

### BRIEF DESCRIPTION OF DRAWINGS

FIG. 1 is a schematic diagram of a composition structure of a system according to an embodiment of this application;
FIG. 2 is a schematic block flowchart of a data transmission method according to an embodiment of this application;
FIG. 3 is a schematic diagram of a composition structure of a third time period according to an embodiment of this application;
FIG. 4 is a schematic block flowchart of another data transmission method according to an embodiment of this application;
FIG. 5-a is a schematic block flowchart of another data transmission method according to an embodiment of this application;

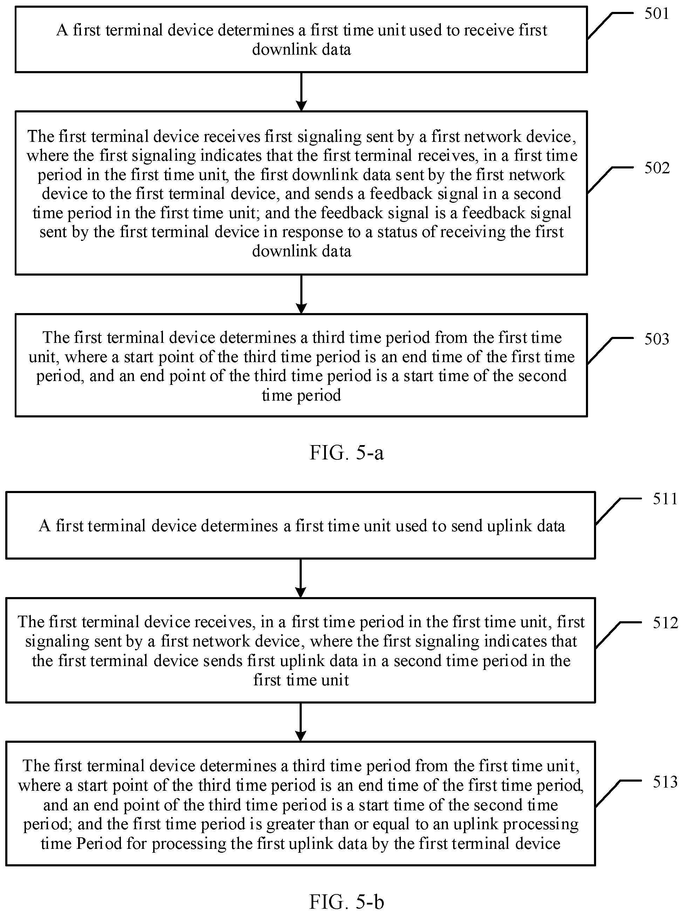

FIG. 5-b is a schematic block flowchart of another data transmission method according to an embodiment of this application;

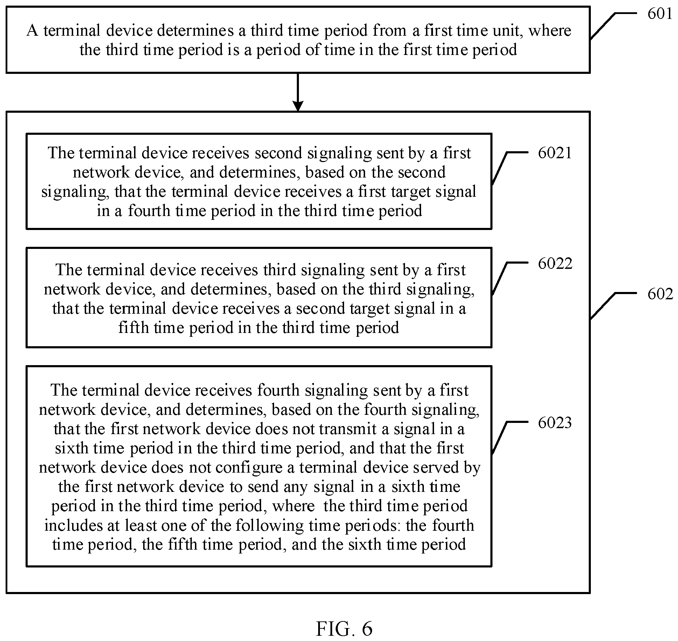

FIG. 6 is a schematic block flowchart of another data transmission method according to an embodiment of this application;

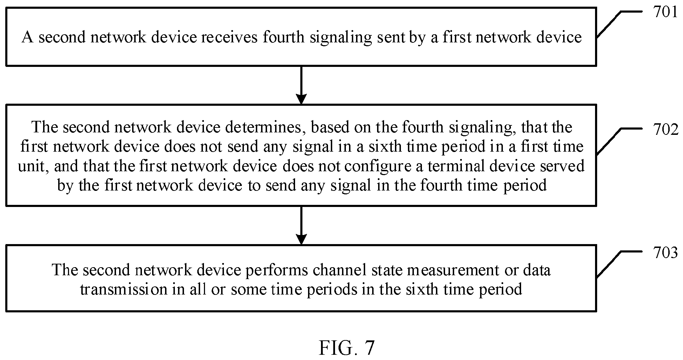

FIG. 7 is a schematic block flowchart of another data transmission method according to an embodiment of this application;

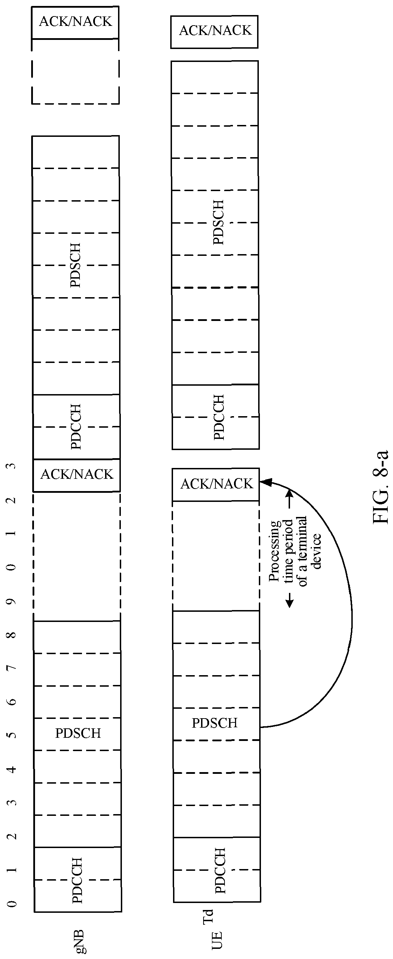

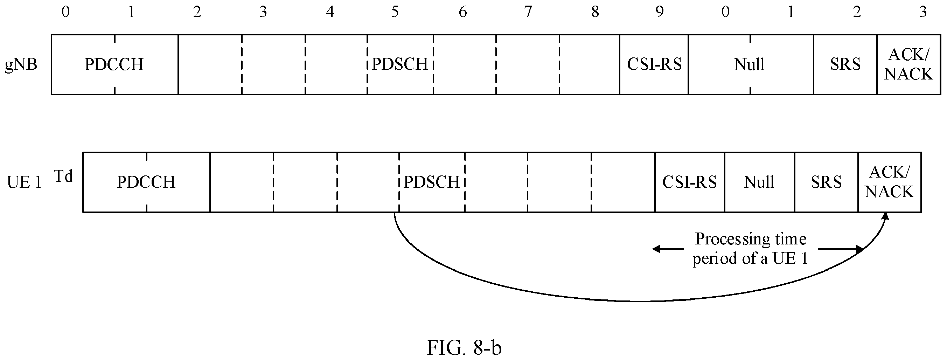

FIG. 8-a is a schematic diagram of an n^{th} slot including a processing time period of a terminal device according to an embodiment of this application;
FIG. 8-b is a schematic diagram of an n^{th} slot including a processing time period of a UE 1 according to an embodiment of this application;

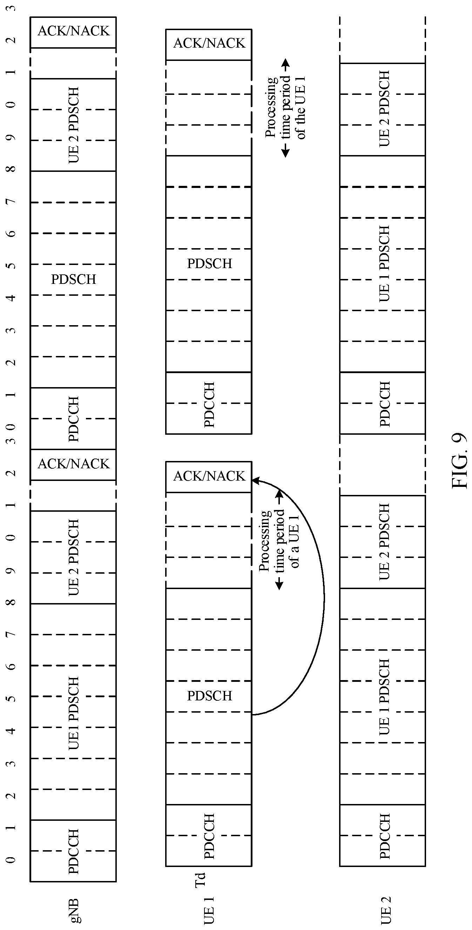

FIG. 9 is another schematic diagram of an n^{th} slot including a processing time period of a UE 1 according to an embodiment of this application;

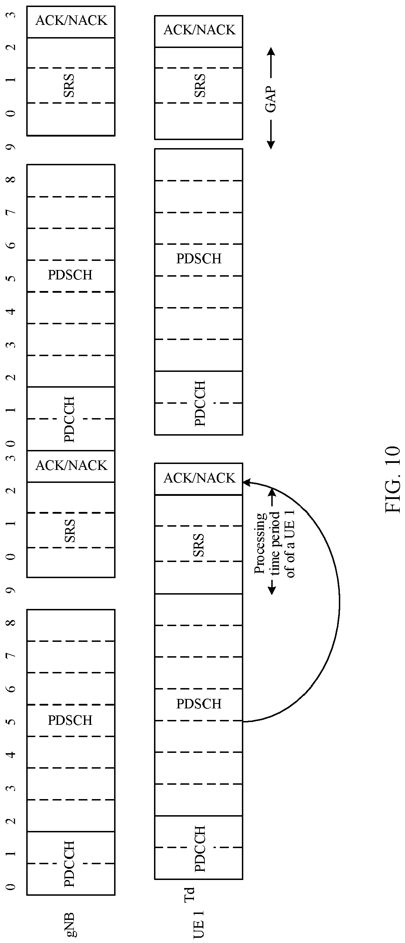

FIG. 10 is another schematic diagram of an n^{th} slot including a processing time period of a UE 1 according to an embodiment of this application;

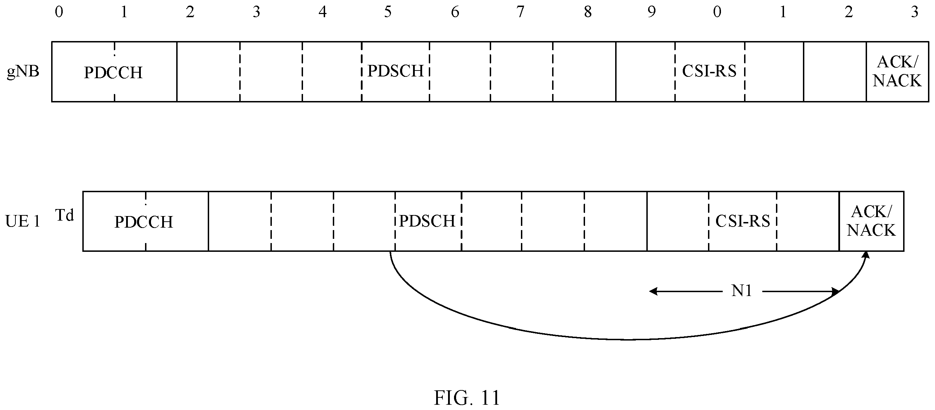

FIG. 11 is another schematic diagram of an n^{th} slot including a processing time period of a UE 1 according to an embodiment of this application;

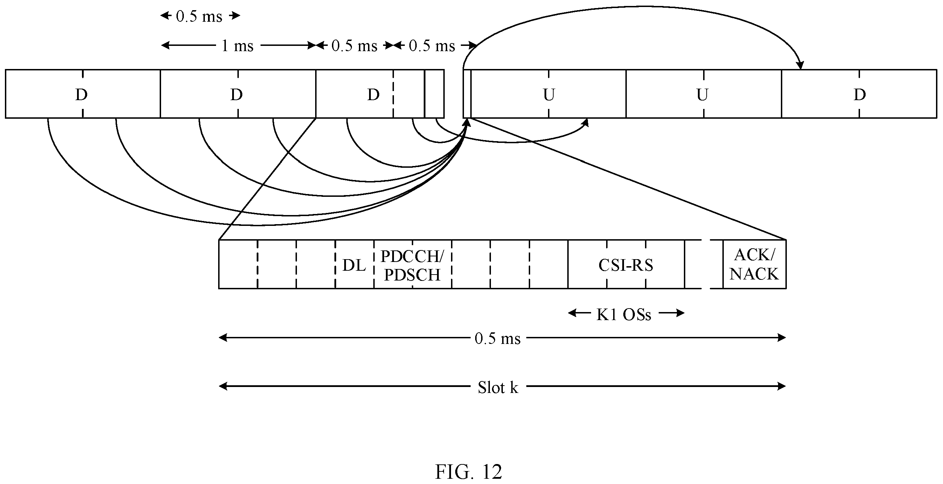

FIG. 12 is a schematic diagram of CSI-RS transmission in an n^{th} slot according to an embodiment of this application;

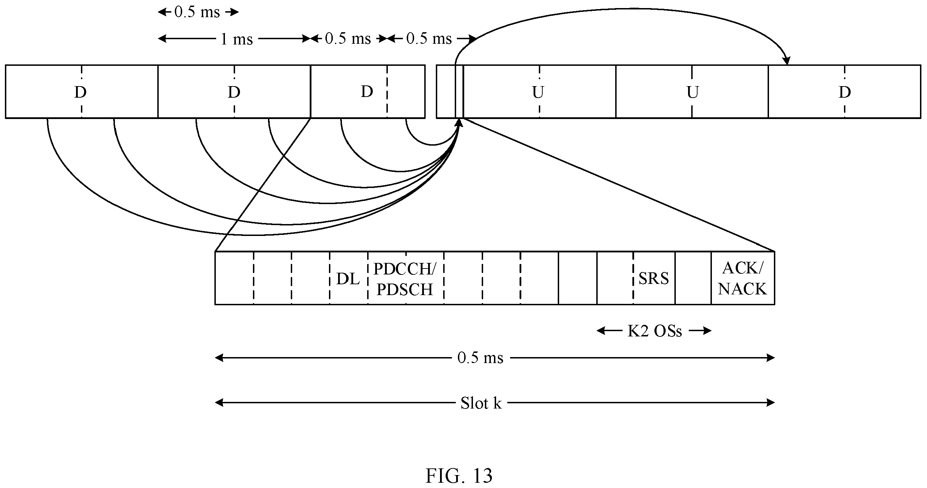

FIG. 13 is a schematic diagram of SRS transmission in an n^{th} slot according to an embodiment of this application;

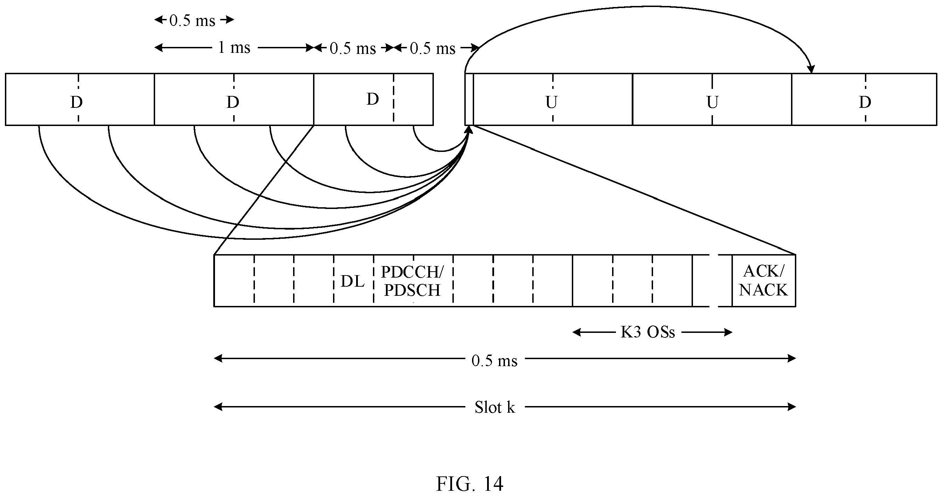

FIG. 14 is a schematic diagram of a case of no signal transmission in K3 symbols in an n^{th} slot according to an embodiment of this application;

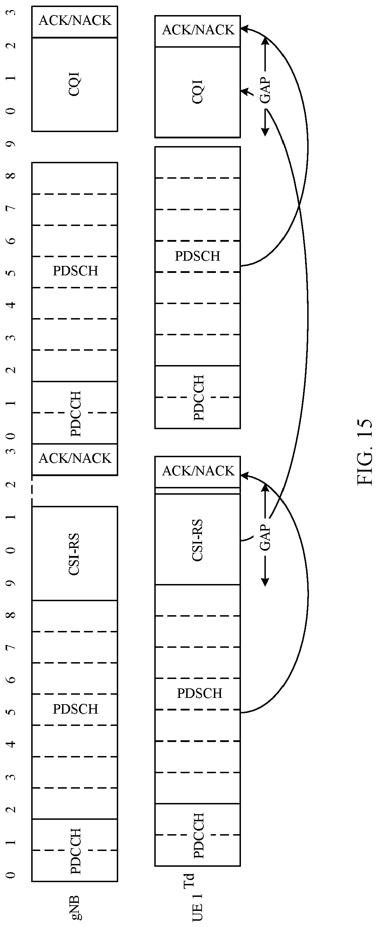

FIG. 15 is a schematic diagram of CSI-RS transmission in an n^{th} slot and CQI transmission in an (n + 1)^{th} slot according to an embodiment of this application.

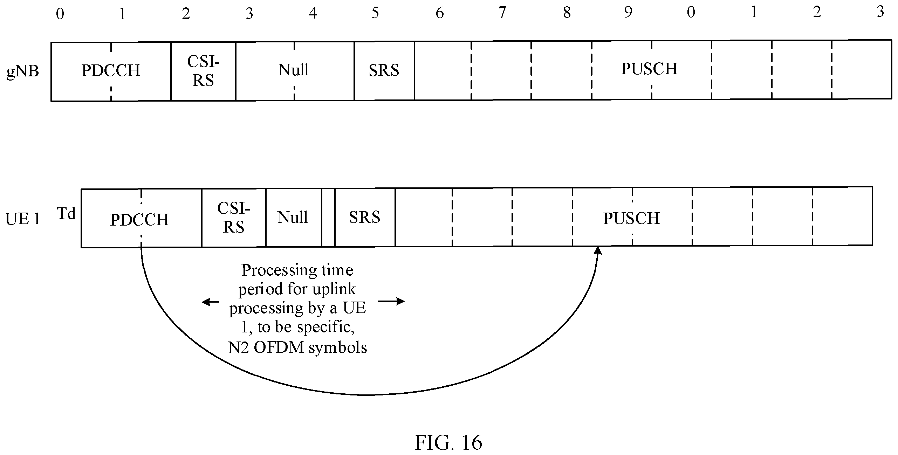

FIG. 16 is a schematic diagram of a processing time period for uplink processing by a UE 1 in an n^{th} slot according to an embodiment of this application;

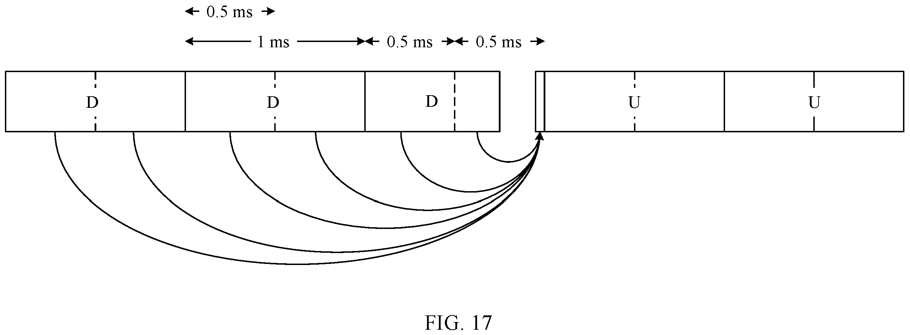

FIG. 17 is a schematic diagram of a plurality of downlink transmissions in an n^{th} slot according to an embodiment of this application;

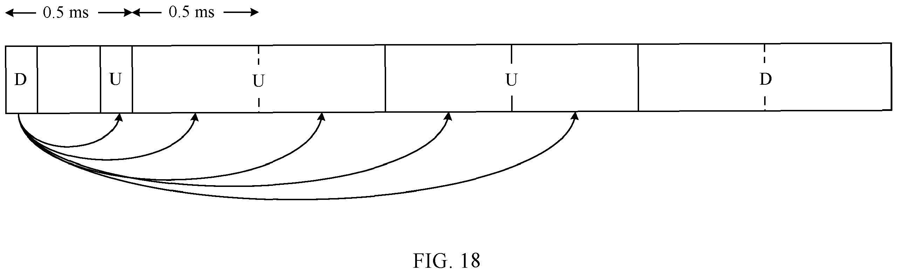

FIG. 18 is a schematic diagram of a plurality of uplink transmissions in an n^{th} slot according to an embodiment of this application;

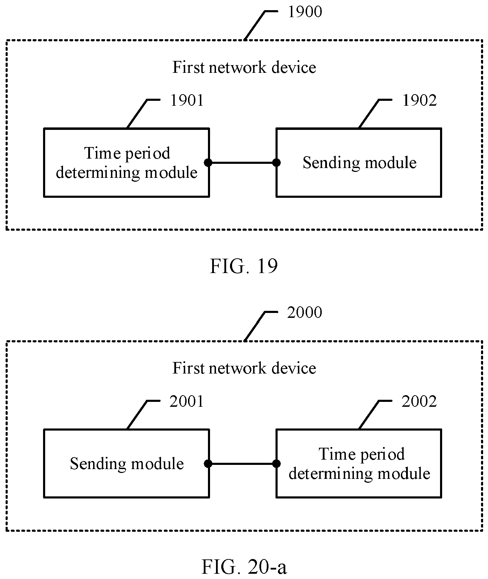

FIG. 19 is a schematic diagram of a composition structure of a first network device according to an embodiment of this application;

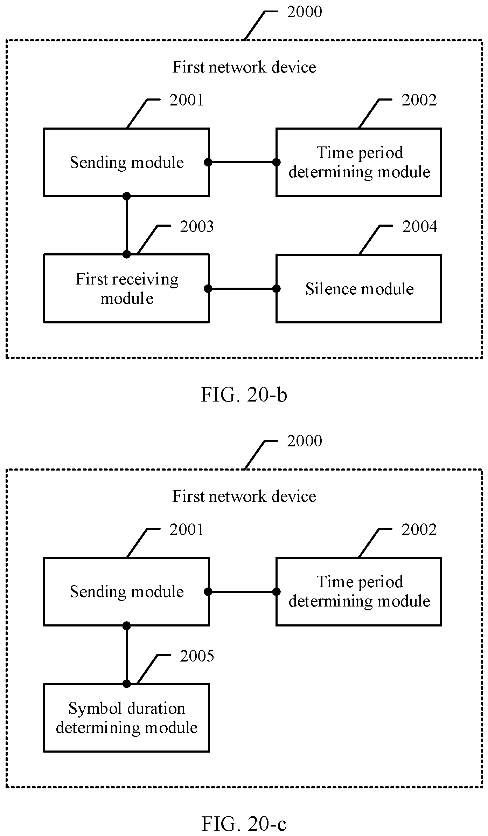

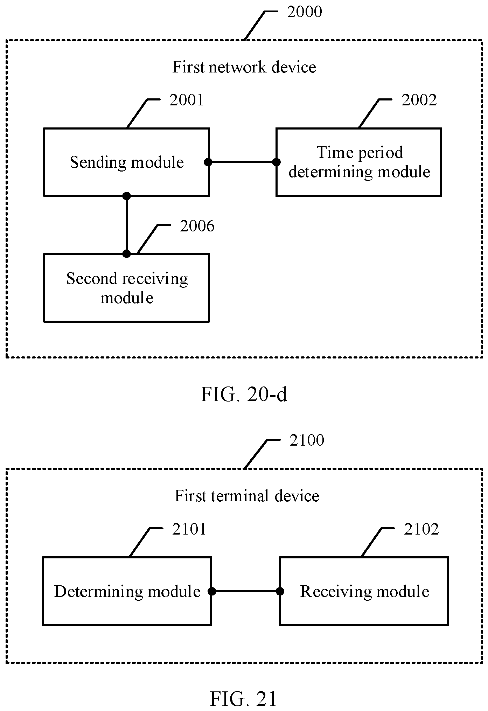

FIG. 20-a is a schematic diagram of a composition structure of another first network device according to an embodiment of this application;
FIG. 20-b is a schematic diagram of a composition structure of another first network device according to an embodiment of this application;
FIG. 20-c is a schematic diagram of a composition structure of another first network device according to an embodiment of this application;
FIG. 20-d is a schematic diagram of a composition structure of another first network device according to an embodiment of this application;
FIG. 21 is a schematic diagram of a composition structure of a first terminal device according to an embodiment of this application;

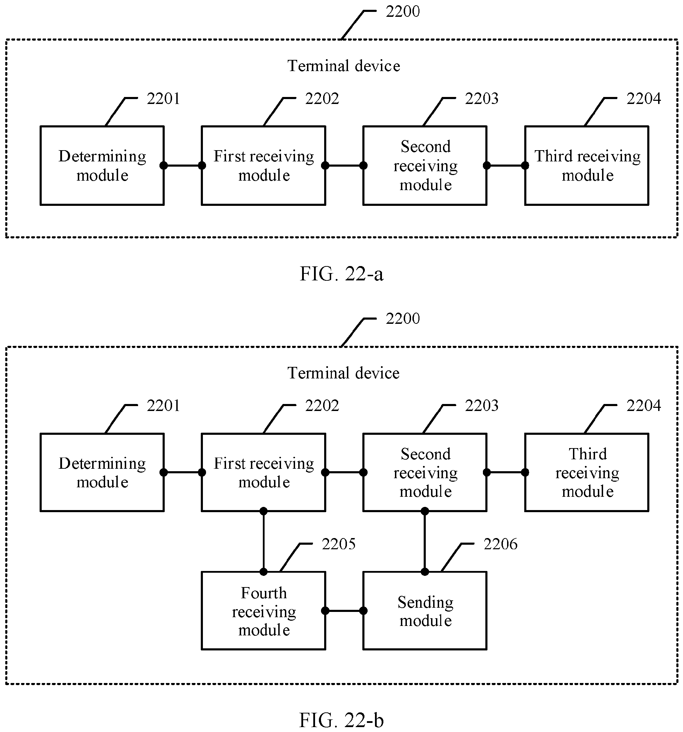

FIG. 22-a is a schematic diagram of a composition structure of a terminal device according to an embodiment of this application;
FIG. 22-b is a schematic diagram of a composition structure of another terminal device according to an embodiment of this application;

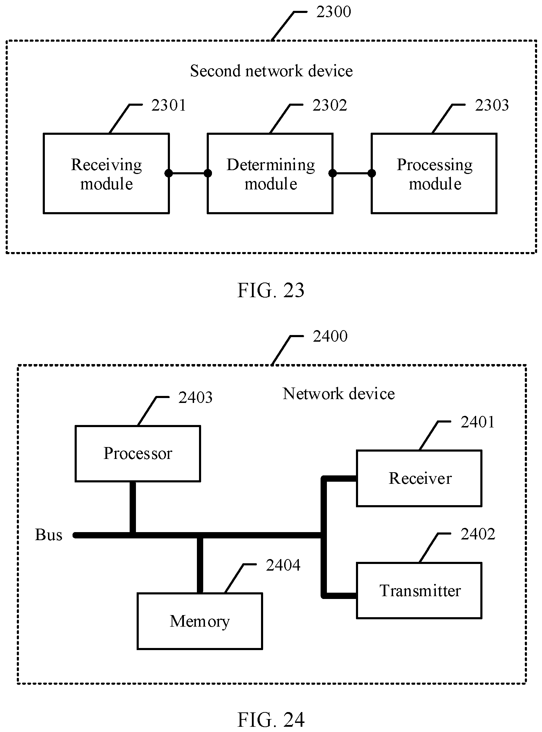

FIG. 23 is a schematic diagram of a composition structure of a second network device according to an embodiment of this application;
FIG. 24 is a schematic diagram of a composition structure of a network device according to an embodiment of this application; and

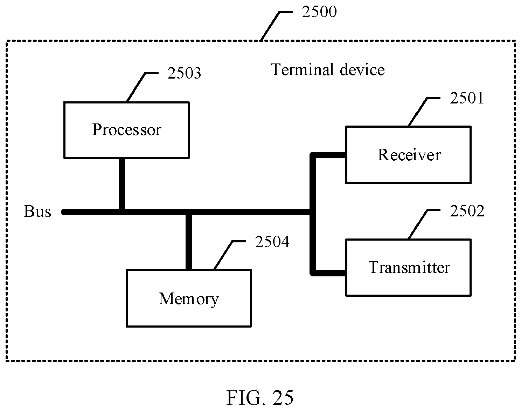

FIG. 25 is a schematic diagram of a composition structure of a terminal device according to an embodiment of this application.

### DESCRIPTION OF EMBODIMENTS

Embodiments of this application provide a data transmission method, a network device, and a terminal device, to improve spectrum resource utilization.

The following describes the embodiments of this application with reference to accompanying drawings.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in the embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

Detailed descriptions are provided below.

A technology described in this application is applicable to a long term evolution (Long Term Evolution, LTE for short) system or another wireless communications system using various wireless access technologies, for example, a system using an access technology such as code division multiple access, frequency division multiple access, time division multiple access, orthogonal frequency division multiple access, or single-carrier frequency division multiple access. In addition, the technology may also be applied to an evolved system subsequent to an LTE system, for example, a fifth-generation 5G (the fifth generation, 5G) system, including a new radio (New Radio, NR) system, an evolved LTE (evolved LTE) system, or the like.

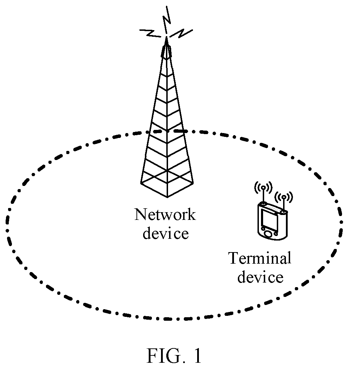

FIG. 1 is a schematic diagram of a composition structure of a system according to an embodiment of this application. The system may include a network device and a terminal device, and there may be one or more terminal devices. The communications system in the embodiments of this application is mainly a wireless communications system. For example, transmission between an access point and a terminal may be performed by using a radio wave; or may be performed by using visible light, laser, infrared, optical photon, a power line, an optical fiber, a coaxial cable, a twisted copper line, or the like. This is not limited. The terminal device is a party that uses a communications resource in a communication process. For example, the terminal device may be a mobile phone terminal or an intelligent mobile terminal. The terminal device in this application may include various handheld devices, vehicle-mounted devices, wearable devices, or computing devices that have a wireless communication function, or other processing devices connected to a wireless modem, and various forms of user equipments (User Equipment, UE), mobile stations (Mobile station, MS), terminals (terminal), terminal equipments (Terminal Equipment), and the like. For ease of description, in this application, the foregoing devices are collectively referred to as user equipment or UE. The network device is a party configured to manage a communication resource and provide a communication service in a communication process. For example, the network device may be a base station, or may be a device such as a server or an access point that provides a communication service. The network device in this application may include a base station (base station, BS for short), and the network device is an apparatus that is deployed in a radio access network and that is configured to provide a wireless communication function for a UE. The base station may include a macro base station, a micro base station, a relay station, an access point, and the like in various forms. In systems using different radio access technologies, devices having functions of a base station may have different names. For example, the device is referred to as an evolved NodeB (evolved NodeB, eNB or eNodeB for short) in an LTE system, is referred to as a gNB in an NR system, and is referred to as a NodeB (NodeB) in a third-generation 3G system.

In the embodiments of this application, in a downlink transmission process, the network device may send downlink data to the terminal device, the terminal device needs to receive the downlink data and send a feedback signal to the network device, and the terminal device generates a downlink processing time period when processing the downlink data. In an uplink transmission process, the network device instructs the terminal device to send uplink data, the terminal device needs to send the uplink data to the network device according to an instruction of the network device, and the terminal device generates an uplink processing time period between receiving the instruction of the network device by the terminal device and starting to send the uplink data by the terminal device. In the embodiments of this application, the network device performs signal transmission by using the downlink processing time period and/or the uplink processing time period, to improve spectrum resource utilization.

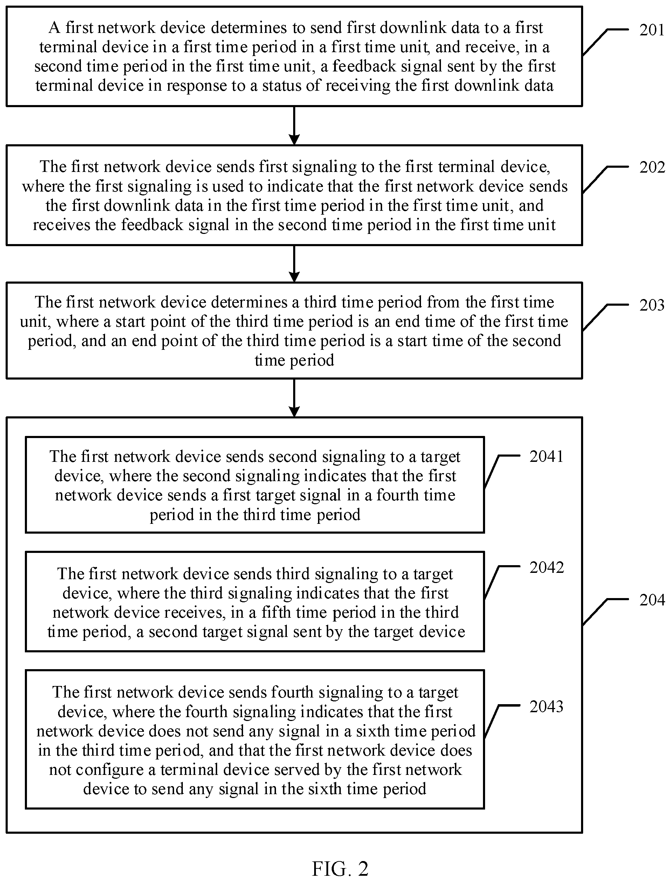

The following first describes a manner of using a spectrum resource by a network device in a downlink transmission process. FIG. 2 shows an embodiment of a data transmission method in this application. The method may include the following steps.

201: A first network device determines to send first downlink data to a first terminal device in a first time period in a first time unit, and receive, in a second time period in the first time unit, a feedback signal sent by the first terminal device in response to a status of receiving the first downlink data.

In the downlink transmission process, the first network device may send the first downlink data to the first terminal device in the first time unit. In this embodiment of this application, the time unit may be a combination of time periods with a specific duration, and the time unit may be a slot (slot), a subframe, or a mini-slot (mini-slot); or may be a plurality of slots or a plurality of subframes. This is not limited in this application. A time unit may include at least two time periods, where a first time period is used by the first network device to send downlink data, and a second time period is used by the first network device to receive uplink data.

202: The first network device sends first signaling to the first terminal device, where the first signaling is used to indicate that the first network device sends the first downlink data in the first time period in the first time unit, and receives the feedback signal in the second time period in the first time unit.

In some embodiments of this application, the data transmission method further includes the following steps:
sending, by the first network device, the first downlink data in the first time period in the first time unit; and
receiving, by the first network device, the feedback signal in the second time period in the first time unit.

203: The first network device determines a third time period from the first time unit, where a start point of the third time period is an end time of the first time period, and an end point of the third time period is a start time of the second time period.

In this embodiment of this application, after determining the first time unit used to send the first downlink data, the first network device needs to determine a time period in which the first downlink data is sent in the first time unit. In this case, the first terminal device needs to process the first downlink data in the third time period from an end time at which the first downlink data is sent to a start time of receiving the feedback signal. For example, the first terminal device needs to receive and parse signaling that carries downlink scheduling and that is sent in the first time unit, and the first terminal needs to receive and decode the first downlink data, and then the first terminal further needs to generate a feedback signal that is sent to the first network device and that indicates whether the first downlink data is correctly received. The first network device determines that a time period for sending the first downlink data is the first time period, and that a time for receiving the feedback signal is the second time period; and determines the third time period based on a downlink processing time period of the first terminal. The third time period is greater than or equal to the downlink processing time period, and in the third time period, the first network device requests the first terminal device to process the first downlink data. In this embodiment of this application, the first network device may perform step 204, to improve spectrum resource utilization.

In this embodiment of this application, the first network device sends first signaling to the first terminal device. The first signaling is used to indicate that the first terminal device receives the first downlink data in the first time unit, and sends the feedback signal in the first time unit. The first signaling indicates that the first terminal device receives the first downlink data in the first time period, and sends the downlink data in the second time period.

In some embodiments of this application, the determining, by the first network device, a third time period from the first time unit includes:
determining, by the first network device, the third time period based on the downlink processing time period for processing the first downlink data by the first terminal device.

In some embodiments of this application, the first network device determines the third time period based on the downlink processing time period for processing the first downlink data by the first terminal device. The start point of the third time period is the end time at which the first downlink data is sent, and the end point of the third time period is a start time at which the feedback signal is received. The feedback signal is a signal, received by the first network device from the first terminal device in the first time unit, in response to a status of receiving the first downlink data.

204: The first network device performs at least one of the following operations:
2041: the first network device sends second signaling to a target device, where the second signaling indicates that the first network device sends a first target signal in a fourth time period in the third time period;
2042: the first network device sends third signaling to a target device, where the third signaling indicates that the first network device receives, in a fifth time period in the third time period, a second target signal sent by the target device; or
2043: the first network device sends fourth signaling to a target device, where the fourth signaling indicates that the first network device does not send any signal in a sixth time period in the third time period, and that the first network device does not configure a terminal device served by the first network device to send any signal in the sixth time period.

The third time period includes at least one of the following time periods: the fourth time period, the fifth time period, and the sixth time period; the target device includes at least one of the following devices: the first terminal device, a second terminal device, and a second network device; the first network device provides a communications service for the second terminal device and the first terminal device; and the second network device is a neighboring network device of the first network device.

In step 202, the first network device generates the first signaling, where the first signaling is used to indicate that the first terminal device receives the first downlink data in the first time unit, and sends the feedback signal in the first time unit; the first network device sends the first signaling to the first terminal device; and the first terminal device receives and parses the first signaling to determine to: receive the first downlink data in the first time unit, and receive the feedback signal in the first time unit. The first network device may send the first signaling to the first terminal device in the first time unit, or the first network device may send the first signaling to the first terminal device in a time unit that is before the first time unit.

In some embodiments of this application, the first signaling includes physical layer control signaling, semi-persistent scheduling SPS signaling, media access control MAC layer signaling, or higher layer signaling;
the second signaling includes physical layer control signaling, SPS signaling, MAC layer signaling, or higher layer signaling;
the third signaling includes physical layer control signaling, SPS signaling, MAC layer signaling, or higher layer signaling; or
the fourth signaling includes physical layer control signaling, SPS signaling, MAC layer signaling, higher layer signaling, or interface signaling between base stations.

For example, for the downlink transmission process, the first signaling includes downlink control (Downlink Control Information, DCI) signaling, semi-static scheduling (Semi-Persistent Scheduling, SPS) signaling, MAC layer scheduling signaling, or higher layer scheduling signaling.

The signaling may be combined in a plurality of manners. For example, the first network device instructs, by using the physical layer control signaling, the first terminal to receive the first downlink data in the first time unit, and instructs, by using the higher layer signaling, the first terminal device to feed back signaling in the first time unit. The signaling is collectively referred to as the first signaling, the second signaling, the third signaling, or the fourth signaling. This is not limited in this application.

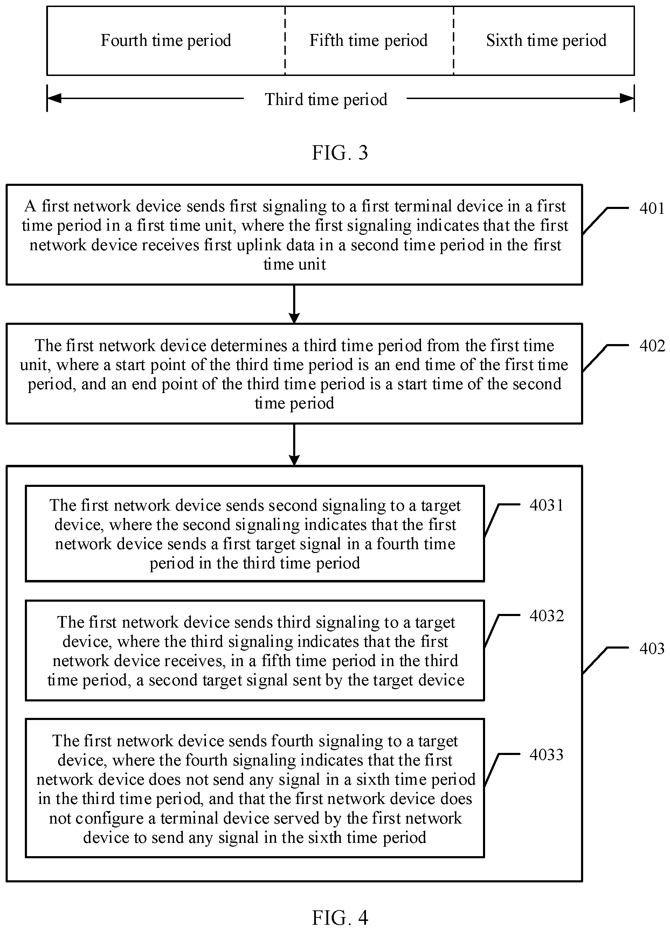

In step 204, the third time period may include at least one of the following time periods: the fourth time period, the fifth time period, and the sixth time period. For example, the third time period may include the fourth time period, the third time period may include the fifth time period, the third time period includes the sixth time period, the third time period may include the fourth time period and the fifth time period, the third time period includes the fourth time period and the fifth time period, the third time period includes the fifth time period and the sixth time period, or the third time period includes the fourth time period, the fifth time period, and the sixth time period. As shown in FIG. 3, description is provided by using an example in which the third time period includes the fourth time period, the fifth time period, and the sixth time period. Duration of all of the fourth time period, the fifth time period, and the sixth time period, target signals in the time periods, and target devices in the time periods may be flexibly configured based on actual scenarios. For example, it may be configured that the third time period includes the fourth time period, the fifth time period, and the sixth time period, the target device in the fourth time period is the second terminal device, the target device in the fifth time period is the first terminal device, and the target device in the sixth time period is a neighboring base station. Alternatively, it may be configured that the third time period includes the fourth time period and the fifth time period, the target device in the fourth time period is the first terminal device, and the target device in the fifth time period is the first terminal device.

When the third time period includes the fourth time period, the first network device performs downlink transmission by using the fourth time period. For example, the first network device may send the first target signal to the target device in the fourth time period, so that the first network device uses the fourth time period in the third time period for downlink transmission. In this way, spectrum resource utilization is improved. The first network device sends second signaling to the target device. The target device may determine, based on the second signaling, that the first network device sends a first target signal in the fourth time period in the third time period. The first target signal is a signal different from the first downlink data. The target device may include the first terminal device and/or the second terminal device. The first network device provides a communications service for both the second terminal device and the first terminal device.

In some embodiments of this application, the first target signal includes: a channel state information reference signal CSI-RS used for beam management, a CSI-RS used for channel quality feedback, a CSI-RS used for mobility management, a reference signal used for phase tracking, a reference signal used for time synchronization, and a reference signal used for frequency synchronization.

The first target signal sent by the first network device may be implemented in a plurality of forms. For example, the first target signal may be downlink data sent to the second terminal device, or the first target signal may include various types of reference signals sent to the first terminal device and/or the second terminal device, including: a channel state information reference signal (Channel State Information-Reference Signal, CSI-RS), a reference signal used for phase tracking, a reference signal used for time synchronization, and a reference signal used for frequency synchronization. For example, the CSI-RS may be a CSI-RS of the first terminal device, a CSI-RS of another terminal device, a cell-specific CSI-RS, or a beam-specific CSI-RS. The CSI-RS may be a CSI-RS used for beam management, a CSI-RS used for channel quality feedback, or a CSI-RS used for mobility management. Alternatively, the first target signal may be a reference signal used for phase tracking, a reference signal used for time synchronization, or a reference signal used for frequency synchronization. The first network device may implement corresponding functions by using a plurality of different reference signals. A specific implementation of the first target signal is used for description only, and is not intended to limit the first target signal.

In some embodiments of this application, when the first target signal is the CSI-RS, after the first network device sends the CSI-RS in the fourth time period, the data transmission method provided in this embodiment of this application further includes the following step.

A1: The first network device receives, in a seventh time period in a second time unit, channel quality feedback (Channel Quality Indicator, CQI) information of the target device for the CSI-RS, where the second time unit is a time unit that is after the first time unit and that includes uplink and downlink switching, and the seventh time period is a time period that is before the uplink feedback signal is transmitted in the second time unit.

The first network device selects, as the second time unit, the time unit that is after the first time unit and that includes uplink and downlink switching; the first network device may select, from the second time unit as the seventh time period, the time period that is before the uplink feedback signal is transmitted; and the first network device receives, in the seventh time period in the second time unit, the channel quality feedback information from the target device in response to the CSI-RS. The target device may be specifically the first terminal device or the second terminal device. The first network device may complete channel quality measurement by using the channel quality feedback information.

In some embodiments of this application, when the target device is specifically the second terminal device, the first target signal includes: second downlink data sent to the second terminal device or third downlink data that is sent to the first terminal device and for which feedback does not need to be performed in the first time unit. Therefore, the first network device can send the second downlink data to the second terminal device in the fourth time period. This can improve spectrum resource utilization. When the target device is specifically the first terminal device, the first target signal includes: third downlink data that is sent to the first terminal device and for which feedback does not need to be performed in the first time unit. Therefore, the first network device can send the third downlink data to the first terminal device in the fourth time period. This can improve spectrum resource utilization.

When the third time period includes the fifth time period, the first network device performs uplink transmission in the fifth time period. For example, the first network device may instruct the target device to send the second target signal to the first network device in the fifth time period, so that the first network device uses the fifth time period in the third time period for uplink transmission. In this way, spectrum resource utilization is improved. The first network device sends the third signaling to the target device. The target device may determine, based on the third signaling, to send the second target signal to the first network device in the fifth time period in the third time period.

In some embodiments of this application, the second target signal may include: an uplink signal that is sent by the target device and that is different from the feedback signal, or another uplink signal that is sent by the target device and that is different from the first uplink data. For example, if the feedback signal is sent by the first terminal device, the second target signal may be an uplink signal sent by the second terminal device, or may be an uplink signal that is sent by the first terminal device and that is different from the feedback signal, for example, a channel quality measurement signal.

When the third time period includes the sixth time period, the sixth time period is a silent time period of the first network device and a terminal device served by the first network device, and the first network device remains in a silent state in the sixth time period, that is, the first network device does not perform downlink transmission in the fourth time period, or instruct the terminal device served by the first network device to perform uplink transmission. The first network device sends the fourth signaling to the target device. The target device may be specifically the second network device or the terminal device served by the first network device, and the second network device is a neighboring network device of the first network device. The second network device may determine, according to the sixth instruction, that the first network device does not send any signal in the sixth time period in the third time period, and that the first network device does not configure a terminal device served by the first network device to send any signal in the sixth time period. Therefore, there is no interference to the second network device in the sixth time period, and the terminal device served by the first network device and/or the terminal device served by the second network device may perform channel quality measurement or data transmission in the sixth time period. This improves spectrum resource utilization.

In some embodiments of this application, if the first time unit is counted in a form of symbols, the first network device obtains a quantity of symbols included in the first time unit. The first time unit includes L symbols, the end time of the first time period is a k^{th} symbol in the L symbols, the start time of the second time period is a j^{th} symbol in the L symbols, and the third time period includes all symbols from a (k + 1)^{th} symbol to a (j - 1)^{th} symbol in the L symbols.

Based on the first time unit and the third time period of the foregoing composition structure, in addition to the foregoing steps, the data transmission method provided in this embodiment of this application may further include the following steps:
B1: when the fourth time period includes the (k + 1)^{th} symbol to a (k + X)^{th} symbol, the first network device sends a first target signal to the target device in the (k + 1)^{th} symbol to the (k + X)^{th} symbol;
B2: when the fifth time period includes a (j - Y)^{th} symbol to the (j - 1)^{th} symbol, the first network device receives, in the (j - Y)^{th} symbol to the (j - 1)^{th} symbol, a second target signal sent by the target device; and/or
B3: when the sixth time period includes a (k + X + 1)^{th} symbol to a (j - Y - 1)^{th} symbol, the first network device does not transmit any signal in the (k + X + 1)^{th} symbol to the (j - Y - 1)^{th} symbol, or configure a terminal device served by the first network device to send any signal in the (k + X + 1)^{th} symbol to the (j - Y - 1)^{th} symbol.

L, k, j, X, and Y all are non-negative integers, and j is greater than k.

In step B1, the first network device may send the first target signal to the target device in the (k + 1)^{th} symbol to the (k + X)^{th} symbol, and the target device may include the first terminal device or the second terminal device. In this case, the target device may receive, in the (k + 1)^{th} symbol to the (k + X)^{th} symbol, the first target signal sent by the first network device, and the first network device may perform downlink transmission in the fourth time period. This can improve spectrum resource utilization. A value of X may be zero symbols, one symbol, or a plurality of symbols. If X is zero, it indicates that the third time period does not include the fourth time period.

In step B2, the first network device may receive, in the (j - Y)^{th} symbol to the (j - 1)^{th} symbol, the second target signal sent by the target device, and the target device may include the first terminal device or the second terminal device. In this case, the target device may send the second target signal to the first network device in the (j - Y)^{th} symbol to the (j - 1)^{th} symbol, and the first network device may perform uplink transmission in the fifth time period. This can improve spectrum resource utilization. A value of Y may be zero symbols, one symbol, or a plurality of symbols. If Y is zero, it indicates that the third time period does not include the fifth time period.

In step B3, the first network device does not transmit any signal in the (k + X + 1)^{th} symbol to the (j - Y - 1)^{th} symbol, that is, the first network device keeps a silent state in the (k + X + 1)^{th} symbol to the (j - Y - 1)^{th} symbol, so that the second network device can perform channel state measurement or data transmission in the (k + X + 1)^{th} symbol to the (j - Y - 1)^{th} symbol. Because the first network device is in the silent state in the (k + X + 1)^{th} symbol to the (j - Y - 1)^{th} symbol, there is no interference to the second network device. In this way, a channel state can be accurately measured, or high-reliability data signal transmission can be implemented.

In some embodiments of this application, the downlink processing time period is N1 symbols, and (j - k - 1) is greater than N1.

In some embodiments of this application, X is equal to N1; or Y is equal to N1.

For example, the first network device may send the first target signal to the target device in the (k + 1)^{th} symbol to a (k + N1)^{th} symbol. In this case, all processing time periods of the first terminal device may be used to send the first target signal, so that spectrum resource utilization can be improved. Alternatively, the first network device may receive, in a (j - N1)^{th} symbol to the (j - 1)^{th} symbol, the second target signal sent by the target device. In this case, all processing time periods of the first terminal device may be used to receive the second target signal, so that spectrum resource utilization can be improved.

The foregoing embodiment describes a manner of using a spectrum resource by a network device in a downlink transmission process. The following describes a manner of using a spectrum resource by a network device in an uplink transmission process. FIG. 4 shows an embodiment of a data transmission method in this application. The method may include the following steps.

401: A first network device sends first signaling to a first terminal device in a first time period in a first time unit, where the first signaling indicates that the first network device receives first uplink data in a second time period in the first time unit.

For the uplink transmission process, the first network device may receive, in the first time unit, the first uplink data sent by the first terminal device. In this embodiment of this application, the time unit may be a combination of time periods with specific duration, the time unit may be a slot or a subframe; or may be one mini-slot mini-slot, a plurality of slots, or a plurality of subframes. This is not limited in this application. A time unit may include at least two time periods, where a first time period is used by the first network device to send uplink scheduling signaling for scheduling the first terminal to send the first uplink data, and the second time period is used by the first network device to receive the first uplink data.

The first signaling is scheduling signaling for scheduling the first terminal to send the first uplink data, the first signaling is sent in the first time period in the first time unit, and the first signaling is used to indicate that the first terminal device sends the first uplink data in the second time period in the first time unit.

402: The first network device determines a third time period from the first time unit, where a start point of the third time period is an end time of the first time period, and an end point of the third time period is a start time of the second time period.

In some embodiments of this application, the determining, by the first network device, a third time period from the first time unit includes:
determining, by the first network device, the third time period based on an uplink processing time period for processing the first uplink data by the first terminal device.

The first network device determines the third time period based on the processing time period for processing the first uplink data by the first terminal device. A start point of the third time period is an end time of the first time period, that is, a receiving end time at which the first terminal device receives the first signaling, and an end point of the third time period is a start time of the second time period, that is, a sending start time at which the first terminal device starts to send the first uplink data scheduled by using the first signaling.

The first network device determines the third time period based on the uplink processing time period for processing the first uplink data by the first terminal device. Specifically, the third time period is greater than or equal to the uplink processing time period for processing the first uplink data by the first terminal device.

In some embodiments of this application, the data transmission method further includes the following step: receiving, by the first network device, second uplink data in the second time period.

In this embodiment of this application, after determining the first time unit used by the first terminal device to send the first uplink data, the first network device needs to determine a time period in which the first uplink data is received in the first time unit. In this case, the first terminal device needs to process the first uplink data in the first time period from the receiving end time at which the first terminal device receives the first signaling to the start time at which the first uplink signal is received. For example, the first terminal device needs to receive and parse the first signaling, and then the first terminal device further generates the first uplink data. The first network device determines the third time period. In the third time period, the first network device requests the first terminal device to process the first uplink data. In this embodiment of this application, the first network device may perform step 403, to improve spectrum resource utilization.

403: The first network device performs at least one of the following operations:
4031: the first network device sends second signaling to a target device, where the second signaling indicates that the first network device sends a first target signal in a fourth time period in the third time period;
4032: the first network device sends third signaling to a target device, where the third signaling indicates that the first network device receives, in a fifth time period in the third time period, a second target signal sent by the target device; or
4033: the first network device sends fourth signaling to a target device, where the fourth signaling indicates that the first network device does not send any signal in a sixth time period in the third time period, and that the first network device does not configure a terminal device served by the first network device to send any signal in the sixth time period.

The third time period includes at least one of the following time periods: the fourth time period, the fifth time period, and the sixth time period; the target device includes at least one of the following devices: the first terminal device, a second terminal device, and a second network device; the first network device provides a communications service for the second terminal device and the first terminal device; and the second network device is a neighboring network device of the first network device.

In step 401, the first network device generates the first signaling, where the first signaling is used to indicate that the first terminal device sends the first uplink data in the first time unit; the first network device sends the first signaling to the first terminal device; the first terminal device receives the first signaling; and the first terminal device parses the first signaling to determine to send the first uplink data in the first time unit. The first network device may send the first signaling to the first terminal device in the first time unit.

In some embodiments of this application, the first signaling includes SPS signaling, MAC layer signaling, higher layer signaling, or physical layer control signaling, for example, uplink scheduling signaling.

In the foregoing embodiment of this application, the example descriptions of step 4031 to step 4033 are similar to the example descriptions in step 2041 to step 2043 in the foregoing embodiment. For details, refer to the descriptions in the foregoing embodiment.

In some embodiments of this application, if the first time unit is counted in a form of symbols, the first time unit includes L symbols, the end time of the first time period is a k^{th} symbol in the L symbols, the start time of the second time period is a j^{th} symbol in the L symbols, and the third time period includes all symbols from a (k + 1)^{th} symbol to a (j - 1)^{th} symbol in the L symbols.

Based on the first time unit and the third time period of the foregoing composition structure, in addition to the foregoing steps, the data transmission method provided in this embodiment of this application may further include the following steps:
C1: when the fourth time period includes the (k + 1)^{th} symbol to a (k + X)^{th} symbol, the first network device sends a first target signal to the target device in the (k + 1)^{th} symbol to the (k + X)^{th} symbol;
C2: when the fifth time period includes a (j - Y)^{th} symbol to the (j - 1)^{th} symbol, the first network device receives, in the (j - Y)^{th} symbol to the (j - 1)^{th} symbol, a second target signal sent by the target device; and/or
C4: when the sixth time period includes a (k + X + 1)^{th} symbol to a (j - Y - 1)^{th} symbol, the first network device does not transmit any signal in the (k + X + 1)^{th} symbol to the (j - Y - 1)^{th} symbol, or configure a terminal device served by the first network device to send any signal in the (k + X + 1)^{th} symbol to the (j - Y - 1)^{th} symbol.

L, k, j, X, and Y all are non-negative integers, and j is greater than k.

In this embodiment of this application, a start point of the third time period is a k^{th} symbol in the L symbols, and an end point of the third time period is a j^{th} symbol in the L symbols. In this case, the k^{th} symbol to the j^{th} symbol in the L symbols may be used by the first network device to perform uplink transmission or downlink transmission or keep a silent state.

In step C1, the first network device may send the first target signal to the target device in the (k + 1)^{th} symbol to the (k + X)^{th} symbol, and the target device may include the first terminal device or the second terminal device. In this case, the target device may receive, in the (k + 1)^{th} symbol to the (k + X)^{th} symbol, the first target signal sent by the first network device, and the first network device may perform downlink transmission in the fourth time period. This can improve spectrum resource utilization. A value of X may be zero symbols, one symbol, or a plurality of symbols. If X is zero, it indicates that the third time period does not include the fourth time period.

In step C2, the first network device may receive, in the (j - Y)^{th} symbol to the (j - 1)^{th} symbol, the second target signal sent by the target device, and the target device may include the first terminal device or the second terminal device. In this case, the target device may send the second target signal to the first network device in the (j - Y)^{th} symbol to the (j - 1)^{th} symbol, and the first network device may perform uplink transmission in the third time period. This can improve spectrum resource utilization. A value of Y may be zero symbols, one symbol, or a plurality of symbols. If Y is zero, it indicates that the third time period does not include the fifth time period.

In step C3, the first network device does not transmit any signal in the (k + X + 1)^{th} symbol to the (j - Y - 1)^{th} symbol, that is, the first network device keeps a silent state in the (k + X + 1)^{th} symbol to the (j - Y - 1)^{th} symbol, so that the second network device can perform channel state measurement or data transmission in the (k + X + 1)^{th} symbol to the (j - Y - 1)^{th} symbol. Because the first network device is in the silent state in the (k + X + 1)^{th} symbol to the (j - Y - 1)^{th} symbol, there is no interference to the second network device. In this way, a channel state can be accurately measured, or high-reliability data signal transmission can be implemented.

In some embodiments of this application, the uplink processing time period is N2 symbols, and (j - k - 1) is greater than N2.

In some embodiments of this application, X is equal to N2; or Y is equal to N2.

For example, the first network device may send the first target signal to the target device in the (k + 1)^{th} symbol to a (k + N1)^{th} symbol. In this case, all processing time periods of the first terminal device may be used to send the first target signal, so that spectrum resource utilization can be improved. Alternatively, the first network device may receive, in a (j - N1)^{th} symbol to the (j - 1)^{th} symbol, the second target signal sent by the target device. In this case, all processing time periods of the first terminal device may be used to receive the second target signal, so that spectrum resource utilization can be improved.

In some embodiments of this application, in addition to the foregoing steps, the data transmission method provided in this embodiment of this application may further include the following steps:
D1: The first network device separately obtains a parameter of a downlink control channel used to carry the first signaling, a parameter of a downlink shared channel used to carry the first downlink data, and a parameter of an uplink channel used to carry a feedback signal.
D2: When the first time period, the second time period, the third time period, the fourth time period, the fifth time period, and the sixth time period are counted in a form of OFDM symbols, the first network device determines duration of a single symbol that is in the first time unit, based on at least one of the following parameters: the parameter of the downlink control channel used to carry the first signaling, the parameter of the downlink shared channel used to carry the first downlink data, the parameter of the uplink channel used to carry the feedback signal, or a predefined reference parameter.

When the first time period, the second time period, the third time period, the fourth time period, the fifth time period, and the sixth time period are counted in a form of OFDM symbols, duration of each of the first time period, the second time period, the third time period, the fourth time period, the fifth time period, and the sixth time period may be obtained by multiplying duration of a single symbol by a quantity of symbols. The duration of the single symbol may be determined based on at least one of the following parameters: the parameter of the downlink control channel used to carry the first signaling, the parameter of the downlink shared channel used to carry the first downlink data, the parameter of the uplink channel used to carry the feedback signal, or the predefined reference parameter. The downlink control channel is a channel used to carry the first signaling, the downlink shared channel is a channel used to carry the first downlink data, the uplink channel is a channel used to carry the feedback signal, and the reference parameter is a predefined reference value used to determine the duration of the single symbol.

The first network device may determine the duration of the single symbol by using at least one of the parameter of the downlink control channel, the parameter of the downlink shared channel, the parameter of the uplink channel, and the reference parameter, and there may be a plurality of implementations for determining the duration of the single symbol based on at least one of the parameter of the downlink control channel, the parameter of the downlink shared channel, the parameter of the uplink channel, and the reference parameter. Specifically, the determining duration of a single symbol that is in the first time unit, based on at least one of the following parameters: the parameter of the downlink control channel used to carry the first signaling, the parameter of the downlink shared channel used to carry the first downlink data, the parameter of the uplink channel used to carry the feedback signal, or a predefined reference parameter in step D2, includes any one of the following steps:
D21: when the parameter of the downlink control channel, the parameter of the downlink shared channel, and the parameter of the uplink channel all include a same subcarrier spacing (Sub-Carrier Spacing, SCS), the first network device uses duration of an OFDM symbol corresponding to the same subcarrier spacing as the duration of the single symbol in the first time unit;
D22: when the parameter of the downlink shared channel and the parameter of the uplink channel include different subcarrier spacings, the first network device determines a maximum subcarrier spacing from the parameter of the downlink shared channel and the parameter of the uplink channel; and uses duration of an OFDM symbol corresponding to the maximum subcarrier spacing as the duration of the single symbol in the first time unit;
D23: when the parameter of the downlink shared channel and the parameter of the uplink channel include different subcarrier spacings, the first network device uses duration of an OFDM symbol corresponding to a subcarrier spacing of the downlink shared channel as the duration of the single symbol in the first time unit;
D24: when the parameter of the downlink shared channel and the parameter of the uplink channel include different subcarrier spacings, the first network device uses an OFDM symbol corresponding to the reference parameter as the duration of the single symbol in the first time unit; or
D25: when the parameter of the downlink shared channel and the parameter of the uplink channel include different subcarrier spacings, the first network device uses duration of an OFDM symbol corresponding to one subcarrier spacing in the parameter of the uplink channel as the duration of the single symbol in the first time unit.

In step D21, when the parameter of the downlink control channel, the parameter of the downlink shared channel, and the parameter of the uplink channel all include the same subcarrier spacing, the duration of the single symbol in the first time unit may be determined based on the same subcarrier spacing. For example, if the parameter of the downlink control channel, the parameter of the downlink shared channel, and the parameter of the uplink channel all include a subcarrier spacing of 15 kHz, one OFDM symbol is an OFDM symbol corresponding to one 15 kHz subcarrier spacing. The first network device uses the duration of the OFDM symbol corresponding to the same subcarrier spacing as the duration of the single symbol in the first time unit. This can reduce parameter configuration complexity.

In step D22, when the parameter of the downlink shared channel and the parameter of the uplink channel include the different subcarrier spacings, the first network device determines the maximum subcarrier spacing from the parameter of the downlink shared channel and the parameter of the uplink channel; and uses the duration of the OFDM symbol corresponding to the maximum subcarrier spacing as the duration of the single symbol in the first time unit. The duration of the OFDM symbol corresponding to the maximum subcarrier spacing is smallest, that is, the single symbol in the first time unit is defined based on the shortest duration of the OFDM symbol. In this way, a resource waste caused by a granularity mismatch can be avoided by defining a smaller granularity.

In step D23, when the parameter of the downlink shared channel and the parameter of the uplink channel include the different subcarrier spacings, the first network device may further use duration of an OFDM symbol corresponding to a subcarrier spacing of the downlink shared channel as the duration of the single symbol in the first time unit. The processing time period of the first terminal device is related to the subcarrier spacing of the downlink shared channel. A larger subcarrier spacing of the downlink shared channel indicates a shorter processing time period of the first terminal device. Therefore, the processing time period can be accurately estimated.

In step D24, when the parameter of the downlink shared channel and the parameter of the uplink channel include the different subcarrier spacings, the first network device may use the OFDM symbol corresponding to the reference parameter as the duration of the single symbol in the first time unit. The reference parameter may be a reference subcarrier spacing, and the first network device may define the duration of the single symbol in the first time unit based on the OFDM symbol corresponding to a reference subcarrier spacing. In this way, the duration of the single symbol can be defined based on a signal transmitted in an actual processing time period of the first terminal device, to facilitate resource sharing.

In step D25, when the parameter of the downlink shared channel and the parameter of the uplink channel include the different subcarrier spacings, the first network device may use the duration of the OFDM symbol corresponding to the subcarrier spacing in the parameter of the uplink channel as the duration of the single symbol in the first time unit. This can reduce parameter configuration complexity of the first terminal device.

The foregoing embodiment describes, from a perspective of the first network device, the data transmission method provided in the embodiments of this application. The following describes, from a perspective of a first terminal device, the data transmission method provided in the embodiments of this application. FIG. 5-a shows a data transmission method provided in an embodiment of this application. The method may include the following steps:
501: The first terminal device determines a first time unit used to receive first downlink data.
502: The first terminal device receives first signaling sent by a first network device, where the first signaling indicates that the first terminal receives, in a first time period in the first time unit, the first downlink data sent by the first network device to the first terminal device, and sends a feedback signal in a second time period in the first time unit; and the feedback signal is a feedback signal sent by the first terminal device in response to a status of receiving the first downlink data.
503: The first terminal device determines a third time period from the first time unit, where a start point of the third time period is an end time of the first time period, and an end point of the third time period is a start time of the second time period.

The third time period is greater than or equal to a downlink processing time period for processing the first downlink data by the first terminal device.

In this embodiment of this application, the first network device generates the first signaling, where the first signaling is used to indicate that the first terminal device receives the first downlink data in the first time unit, and sends the feedback signal in the first time unit; the first network device sends the first signaling to the first terminal device; and the first terminal device receives and parses the first signaling to determine to: receive the first downlink data in the first time unit, and send the feedback signal in the first time unit. The first network device may send the first signaling to the first terminal device in the first time unit, or the first network device may send the first signaling to the first terminal device in a time unit that is before the first time unit.

In some embodiments of this application, the first signaling includes downlink physical layer control signaling, semi-persistent scheduling signaling, MAC layer signaling, or higher layer signaling. For example, the first signaling may be SPS signaling.

FIG. 5-a describes a data transmission method performed by a first terminal device in a downlink transmission process. The following describes a data transmission method performed by a first terminal in an uplink transmission process. Referring to FIG. 5-b, a data transmission method provided in an embodiment of this application may include the following steps:
511: A first terminal device determines a first time unit used to send uplink data.
512: The first terminal device receives, in a first time period in the first time unit, first signaling sent by a first network device, where the first signaling indicates that the first terminal device sends first uplink data in a second time period in the first time unit.
513: The first terminal device determines a third time period from the first time unit, where a start point of the third time period is an end time of the first time period, and an end point of the third time period is a start time of the second time period.

The third time period is greater than or equal to an uplink processing time period for processing the first uplink data by the first terminal device.

In some embodiments of this application, the first time unit includes L symbols, the end time of the first time period is a k^{th} symbol in the L symbols, the start time of the second time period is a j^{th} symbol in the L symbols, and the third time period includes all symbols from a (k + 1)^{th} symbol to a (j - 1)^{th} symbol in the L symbols.

L, k, and j all are non-negative integers, and j is greater than k.

Referring to FIG. 6, a data transmission method provided in an embodiment of this application may include the following steps:
601: A terminal device determines a third time period from a first time unit, where the third time period is a period of time in the first time period.
602: The terminal device performs at least one of the following operations:
   6021: the terminal device receives second signaling sent by a first network device, and determines, based on the second signaling, that the terminal device receives a first target signal in a fourth time period in the third time period;
   6022: the terminal device receives third signaling sent by a first network device, and determines, based on the third signaling, that the terminal device receives a second target signal in a fifth time period in the third time period; or
   6023: the terminal device receives fourth signaling sent by a first network device, and determines, based on the fourth signaling, that the first network device does not transmit a signal in a sixth time period in the third time period, and that the first network device does not configure a terminal device served by the first network device to send any signal in a sixth time period in the third time period.

The third time period includes at least one of the following time periods: the fourth time period, the fifth time period, and the sixth time period.

In some embodiments of this application, the first time unit includes L symbols, and the third time period includes all symbols from a (k + 1)^{th} symbol to a (j - 1)^{th} symbol in the L symbols.

The data transmission method provided in this embodiment of this application further includes the following steps:
when the fourth time period includes the (k + 1)^{th} symbol to a (k + X)^{th} symbol, receiving, by the terminal device in the (k + 1)^{th} symbol to the (k + X)^{th} symbol, a first target signal sent by the first network device; and/or
when the fifth time period includes a (j - Y)^{th} symbol to the (j - 1)^{th} symbol, sending, by the terminal device in a (j - Y)^{th} symbol to the (j - 1)^{th} symbol, a second target signal to the first network device.

L, k, j, X, and Y all are non-negative integers, and j is greater than k.

In step 602, duration of all of the fourth time period, the fifth time period, and the sixth time period, target signals in the time periods, and target devices in the time periods may be flexibly configured based on actual scenarios. For example, it may be configured that the third time period includes the fourth time period, the fifth time period, and the sixth time period, the target device in the fourth time period is a second terminal device, the target device in the fifth time period is a first terminal, and the target device in the sixth time period is a neighboring base station. Alternatively, it may be configured that the third time period includes the fourth time period and the fifth time period, the target device in the fourth time period is a first terminal device, and the target device in the fifth time period is the first terminal device.

For the target device, the target device may receive one or more of the second control signaling, the third control signaling, and the fourth control signaling. The target device performs a corresponding operation based on the received control signaling. A sending or receiving action after the target device receives the control signaling may be subsequently processed based on a specific scenario. Details are not described in this application.

For example, when the third time period includes the fourth time period, and the target device is a second terminal device, the second terminal device performs downlink receiving in the fourth time period. For example, the first network device may send the first target signal to the second terminal device in the fourth time period, so that the second terminal device uses the fourth time period in the third time period for downlink receiving. In this way, spectrum resource utilization is improved. For example, when the target device is the first terminal device, and the third time period includes the fourth time period, the first terminal device may receive second signaling sent by the first network device. The first terminal device may determine, based on the second signaling, that the first network device sends a first target signal in the fourth time period in the third time period. The first target signal is a signal different from the first downlink data.

In some embodiments of this application, the first target signal received by the first terminal device may be implemented in a plurality of forms. For example, the first target signal may include a CSI-RS, a reference signal used for phase tracking, a reference signal used for time synchronization, or a reference signal used for frequency synchronization. For example, the CSI-RS may be a CSI-RS of the first terminal device, a CSI-RS of another terminal device, a cell-specific CSI-RS, or a beam-specific CSI-RS. Alternatively, the first target signal may be a reference signal used for phase tracking, a reference signal used for time synchronization, or a reference signal used for frequency synchronization. The first network device may implement corresponding functions by using a plurality of different reference signals. A specific implementation of the first target signal is used for description only, and is not intended to limit the first target signal.

In some embodiments of this application, when the first target signal is a CSI-RS, after the first terminal device receives the CSI-RS in the fourth time period, the data transmission method provided in this embodiment of this application further includes the following step.

E1: The first terminal device sends, to the first network device in a seventh time period in a second time unit, channel quality feedback information that is in response to the CSI-RS, where the second time unit is a time unit that is after the first time unit and that includes uplink and downlink switching, and the seventh time period is a time period that is in the second time unit and that is before an uplink feedback signal is sent.

The first network device selects, as the second time unit, the time unit that is after the first time unit and that includes uplink and downlink switching, the first network device may select, from the second time unit as the fifth time period, the time period that is before the uplink feedback signal is transmitted, and the first network device receives, in the seventh time period in the second time unit, the channel quality feedback information sent by the first terminal device in response to the CSI-RS. The first network device may complete channel quality measurement by using the channel quality feedback information.

In some embodiments of this application, the first target signal includes: the third downlink data that is sent to the first terminal device and for which feedback does not need to be performed in the first time unit. In this case, the first terminal device may receive, in the fourth time period, the third downlink data sent by the first network device. This can improve spectrum resource utilization.

When the third time period includes the fifth time period, and the target device is the first terminal device, the first terminal device performs uplink transmission in the fifth time period. For example, the first network device may instruct the first terminal device to send the second target signal to the first network device in the fifth time period, so that the first terminal device uses the fifth time period in the third time period for uplink transmission. In this way, spectrum resource utilization is improved. The first network device sends the third signaling to the first terminal device. The first terminal device may determine, based on the third signaling, to send the second target signal to the first network device in the third time period in a first time period.

In some embodiments of this application, the second target signal may include: an uplink signal that is sent by the target device and that is different from the feedback signal. For example, if the feedback signal is sent by the first terminal device, the second target signal may be an uplink signal that is sent by the first terminal device and that is different from the feedback signal, or another uplink signal that is sent by the target device and that is different from the first uplink data.

When the third time period includes the sixth time period, and the target device is the first terminal device, the sixth time period is a silent time period of the first network device and the terminal device served by the first network device, and the first network device remains in a silent state in the sixth time period, that is, the first network device does not perform downlink transmission in the fourth time period, or instruct the terminal device served by the first network device to perform uplink transmission. The first network device sends sixth signaling to the first terminal device, and the first terminal device may keep the silent state in the sixth time period according to the fourth instruction. In this case, there is no interference to the second network device in the fourth time period, and the second network device may perform channel quality measurement or data transmission in the sixth time period. This improves utilization efficiency of spectrum resources.

In some embodiments of this application, if the first time unit is counted in a form of symbols, the first network device obtains a quantity of symbols included in the first time unit. The first time unit includes L symbols, the end time of the first time period is a k^{th} symbol in the L symbols, the start time of a second time period is a j^{th} symbol in the L symbols, and the third time period includes all symbols from a (k + 1)^{th} symbol to a (j - 1)^{th} symbol in the L symbols.

Based on the first time unit and the third time period of the foregoing composition structure, in addition to the foregoing steps, the data transmission method provided in this embodiment of this application may further include the following steps:
F1: when the fourth time period includes the (k + 1)^{th} symbol to a (k + X)^{th} symbol, the terminal device receives, in the (k + 1)^{th} symbol to the (k + X)^{th} symbol, a first target signal sent by the first network device; and/or
F2: when the fifth time period includes a (j - Y)^{th} symbol to the (j - 1)^{th} symbol, the terminal device sends a second target signal to the first network device in the (j - Y)^{th} symbol to the (j - 1)^{th} symbol.

L, k, j, X, and Y all are non-negative integers, and j is greater than k.

The terminal device may be the first terminal device or the second terminal device.

In step F1, the first network device may send the first target signal to the terminal device in the (k + 1)^{th} symbol to the (k + X)^{th} symbol. In this case, the terminal device may receive, in the (k + 1)^{th} symbol to the (k + X)^{th} symbol, the first target signal sent by the first network device, and the first network device may perform downlink transmission in the fourth time period. This can improve spectrum resource utilization. A value of X may be zero symbols, one symbol, or a plurality of symbols. If X is zero, it indicates that the third time period does not include the fourth time period.

In step F2, the first network device may receive, in the (j - Y)^{th} symbol to the (j - 1)^{th} symbol, the second target signal sent by the terminal device, the terminal device may send the second target signal to the first network device in the (j - Y)^{th} symbol to the (j - 1)^{th} symbol, and the first network device may perform uplink transmission in the fifth time period. This can improve spectrum resource utilization. A value of Y may be zero symbols, one symbol, or a plurality of symbols. If Y is zero, it indicates that the third time period does not include the fourth time period. If X is zero, it indicates that the third time period does not include the fifth time period.

The following provides description by using an example in which the terminal device in step 602 is specifically a second terminal device.

In step 602, the third time period may include at least one of the following time periods: the fourth time period, the fifth time period, and the sixth time period. For example, the third time period may include the fourth time period, the third time period may include the fifth time period, the third time period includes the sixth time period, the third time period may include the fourth time period and the fifth time period, the third time period includes the fifth time period and the sixth time period, the third time period includes the fifth time period and the sixth time period, or the third time period includes the fourth time period, the fifth time period, and the sixth time period.

When the third time period includes the fourth time period, the second terminal device performs downlink receiving in the fourth time period. For example, the first network device may send the first target signal to the second terminal device in the fourth time period, that is, the second terminal device receives the first target signal in the fourth time period, so that the second terminal device uses the fourth time period in the third time period for downlink receiving. In this way, spectrum resource utilization is improved. The second terminal device may receive the second signaling sent by the first network device, and the second terminal device may determine, based on the second signaling, that the first network device sends the first target signal in the fourth time period in the third time period. The first target signal is a signal different from the first downlink data.

In some embodiments of this application, the first target signal received by the first terminal device may be implemented in a plurality of forms. For example, the first target signal may include a CSI-RS, a reference signal used for phase tracking, a reference signal used for time synchronization, or a reference signal used for frequency synchronization. For example, the CSI-RS may be a CSI-RS of the second terminal device, a CSI-RS of another terminal device, a cell-specific CSI-RS, or a beam-specific CSI-RS. Alternatively, the first target signal may be a reference signal used for phase tracking, a reference signal used for time synchronization, or a reference signal used for frequency synchronization. The first network device may implement corresponding functions by using a plurality of different reference signals. A specific implementation of the first target signal is used for description only, and is not intended to limit the first target signal.

In some embodiments of this application, when the first target signal is a CSI-RS, after the second terminal device receives the CSI-RS in the fourth time period, the data transmission method provided in this embodiment of this application further includes the following step.

G1: The second terminal device sends, to the first network device in a seventh time period in a second time unit, channel quality feedback information that is in response to the CSI-RS, where the second time unit is a time unit that is after the first time unit and that includes uplink and downlink switching, and the seventh time period is a time period that is in the second time unit and that is before an uplink feedback signal is sent.

The first network device selects, as the second time unit, the time unit that is after the first time unit and that includes uplink and downlink switching, the first network device may select, from the second time unit as the seventh time period, the time period that is before the uplink feedback signal is transmitted, and the first network device receives, in the seventh time period in the second time unit, the channel quality feedback information sent by the second terminal device in response to the CSI-RS. The first network device may complete channel quality measurement by using the channel quality feedback information.

In some embodiments of this application, the first target signal includes: the third downlink data that is sent to the second terminal device and for which feedback does not need to be performed in the first time unit. In this case, the first terminal device may receive, in the fourth time period, the third downlink data sent by the first network device. This can improve spectrum resource utilization.

When the third time period includes the fifth time period, the second terminal device performs uplink transmission in the fifth time period. For example, the first network device may instruct the second terminal device to send the second target signal to the first network device in the fifth time period, so that the second terminal device uses the fifth time period in the third time period for uplink transmission. In this way, spectrum resource utilization is improved. The first network device sends the third signaling to the second terminal device. The second terminal device may determine, based on the third signaling, to send the second target signal to the first network device in the fifth time period in the third time period.

In some embodiments of this application, the second target signal may include: another uplink signal that is sent by the second terminal device and that is different from the feedback signal. For example, if the feedback signal is sent by the first terminal device, the second target signal may be an uplink signal that is sent by the second terminal device and that is different from the feedback signal, or another uplink signal that is sent by the target device and that is different from the first uplink data.

When the third time period includes the sixth time period, the sixth time period is a silent time period of the first network device and a terminal device served by the first network device, and the first network device remains in a silent state in the sixth time period, that is, the first network device does not perform downlink transmission in the sixth time period, or instruct the terminal device served by the first network device to perform uplink transmission. The first network device sends sixth signaling to the second terminal device, and the second terminal device may keep the silent state in the sixth time period according to the sixth instruction. In this case, there is no interference to the second network device in the sixth time period, and the second network device may perform channel quality measurement or data transmission in the sixth time period. This improves spectrum resource utilization.

In some embodiments of this application, if the first time unit is counted in a form of symbols, the first network device obtains a quantity of symbols included in the first time unit. The first time unit includes L symbols, the end time of the first time period is a k^{th} symbol in the L symbols, the start time of the second time period is a j^{th} symbol in the L symbols, and the third time period includes all symbols from a (k + 1)^{th} symbol to a (j - 1)^{th} symbol in the L symbols.

Based on the first time unit and the first time period of the foregoing composition structure, in addition to the foregoing steps, the data transmission method provided in this embodiment of this application may further include the following steps:
H1: when the fourth time period includes the (k + 1)^{th} symbol to a (k + X)^{th} symbol, the second terminal device receives, in the (k + 1)^{th} symbol to the (k + X)^{th} symbol, a first target signal sent by the first network device; and/or
H2: when the fifth time period includes a (j - Y)^{th} symbol to the (j - 1)^{th} symbol, the second terminal device sends a second target signal to the first network device in the (j - Y)^{th} symbol to the (j - 1)^{th} symbol.

L, k, j, X, and Y all are non-negative integers, j is greater than k, and (j - k - 1) is greater than a processing time period.

In step HI, the first network device may send the first target signal to the second terminal device in the (k + 1)^{th} symbol to the (k + X)^{th} symbol. In this case, the second terminal device may receive, in the (k + 1)^{th} symbol to the (k + X)^{th} symbol, the first target signal sent by the first network device, and the first network device may perform downlink transmission in the fourth time period. This can improve spectrum resource utilization. A value of X may be zero symbols, one symbol, or a plurality of symbols. If X is zero, it indicates that the third time period does not include the fourth time period.

In step H2, the first network device may receive, in the (j - Y)^{th} symbol to the (j - 1)^{th} symbol, the second target signal sent by the terminal device, the terminal device may send the second target signal to the first network device in the (j - Y)^{th} symbol to the (j - 1)^{th} symbol, and the first network device may perform uplink transmission in the fifth time period. This can improve spectrum resource utilization. A value of Y may be zero symbols, one symbol, or a plurality of symbols. If X is zero, it indicates that the third time period does not include the fourth time period.

The foregoing embodiment describes a manner of using a spectrum resource by a second terminal device in a data transmission process. The following describes a manner of using a spectrum resource by a second network device in a downlink transmission process. FIG. 7 shows an embodiment of a data transmission method in this application. The method may include the following steps:
701: A second network device receives fourth signaling sent by a first network device.
702: The second network device determines, based on the fourth signaling, that the first network device does not send any signal in a sixth time period in a first time unit, and that the first network device does not configure a terminal device served by the first network device to send any signal in the fourth time period.
703: The second network device performs channel state measurement or data transmission in all or some time periods in the sixth time period.

In step 702, the third time period in the first time unit may include at least one of the following time periods: the fourth time period, the fifth time period, and the sixth time period. For example, the third time period may include the fourth time period, the third time period may include the fifth time period, the third time period includes the sixth time period, the third time period may include the fourth time period and the fifth time period, the third time period includes the fifth time period and the sixth time period, the third time period includes the fifth time period and the sixth time period, or the third time period includes the fourth time period, the fifth time period, and the sixth time period.

When the third time period includes the sixth time period, the sixth time period is a silent time period of the first network device and a terminal device served by the first network device, and the first network device remains in a silent state in the sixth time period, that is, the first network device does not perform downlink transmission in the sixth time period, or instruct the terminal device served by the first network device to perform uplink transmission. The first network device sends the fourth signaling to a target device. The target device may be specifically the second network device, and the second network device is a neighboring network device of the first network device. The second network device may determine, according to the fourth instruction, that the first network device does not send any signal in the sixth time period in the third time period, and that the first network device does not configure a terminal device served by the first network device to send any signal in the sixth time period. In this case, there is no interference to the second network device in the fourth time period, and the second network device may perform channel quality measurement or data transmission in the fourth time period. This improves spectrum resource utilization.

In some embodiments of this application, if the first time unit is counted in a form of symbols, the first network device obtains a quantity of symbols included in the first time unit. The first time unit includes L symbols, the end time of the first time period is a k^{th} symbol in the L symbols, the start time of the second time period is a j^{th} symbol in the L symbols, and the third time period includes all symbols from a (k + 1)^{th} symbol to a (j - 1)^{th} symbol in the L symbols.

Based on the first time unit and the third time period of the foregoing composition structure, in addition to the foregoing steps, in the data transmission method provided in this embodiment of this application, step 702 may further include the following step:

I1. When the sixth time period includes a (k + X + 1)^{th} symbol to a (j - Y - 1)^{th} symbol, the second network device determines that the first network device does not transmit any signal in the (k + X + 1)^{th} symbol to the (j - Y - 1)^{th} symbol, or configure a terminal device served by the first network device to send any signal in the fourth time period.

L, k, j, X, and Y all are non-negative integers, and j is greater than k.

In step I1, the first network device does not transmit any signal in the (k + X + 1)^{th} symbol to the (j - Y - 1)^{th} symbol, or configure the terminal device served by the first network device to send any signal in the fourth time period, that is, the first network device keeps a silent state in the (k + X + 1)^{th} symbol to the (j - Y - 1)^{th} symbol, so that the second network device can perform channel state measurement or data transmission in the (k + X + 1)^{th} symbol to the (j - Y - 1)^{th} symbol. Because the first network device is in the silent state in the (k + X + 1)^{th} symbol to the (j - Y- 1)^{th} symbol, there is no interference to the second network device. In this way, a channel state can be accurately measured, or high-reliability data signal transmission can be implemented.

In some embodiments of this application, a processing time period is N1 symbols, and X is equal to N1, or Y is equal to N1. For example, the first network device does not send any signal in a (k + N1 + 1)^{th} symbol to a (j - N1 - 1)^{th} symbol, or instruct the terminal device to send any signal in a (k + N1 + 1)^{th} symbol to a (j - N1 - 1)^{th} symbol. In this case, because the first network device keeps a silent state, there is no interference to the second network device. In this way, a channel state can be accurately measured, or high-reliability data signal transmission can be implemented.

To better understand and implement the foregoing solution in the embodiments of this application, the following uses a corresponding application scenario as an example for detailed description.

FIG. 8-a is a schematic diagram of an example in which an n^{th} slot includes uplink and downlink switching of a terminal device according to an embodiment of this application. In a frame structure on a gNB side, scheduling information of a PDSCH is indicated in a PDCCH in a current slot, and certainly, indication across slots is not excluded. As shown in FIG. 8-a, a slot includes 14 OFDM symbols. A PDSCH is transmitted in a symbol 2 to a symbol 8, that is, in a first time period; and in a subsequent processing time period of a terminal device including about three symbols, one symbol is used for air interface transmission, and a last symbol is used to carry a feedback signal. In a frame structure on a UE side, a propagation delay (Time delay, Td) occurs relative to the frame structure on the gNB side, and a last symbol in a slot is used to carry a feedback signal in response to the PDSCH, that is, a second time period.

### Embodiment 1

FIG. 8-b is a schematic diagram of an n^{th} slot including a processing time period of a UE 1 according to an embodiment of this application. First, description is provided by using an example of a data transmission process on a side of a cell (or a base station, which is not distinguished in this application). The following steps are included.

Step 1: A first cell (a base station) determines to send downlink data to a first terminal in an n^{th} slot, and determines to receive, in the n^{th} slot, a feedback signal sent by the first terminal in response to the downlink data.

Step 2: The first cell notifies a terminal of information indicating that the first cell sends the downlink data to the first terminal in the n^{th} slot, and instructs the terminal to send a feedback signal for the downlink data to the base station in the n^{th} slot.

Further, the first cell may further notify the first terminal of a specific symbol or specific symbols in the n^{th} slot that is or are used to send downlink data and a specific symbol or specific symbols in the n^{th} slot that is or are used to send a feedback signal.

A (0 - k)^{th} OFDM symbol is a symbol for receiving the downlink data, that is, a first time period. A j^{th} symbol to an (L - 1)^{th} symbol are symbols for sending the feedback signal, that is, a second time period. A time period between an end time (a k^{th} OFDM symbol) at which the downlink data is sent and a start time (a j^{th} OFDM symbol) at which the feedback signal in response to the downlink data is received, that is, a time period between a (k + 1)^{th} symbol and a (j - 1)^{th} symbol, is a third time period. The third time period is greater than N1 OFDM symbols, and N1 is greater than or equal to 1.

The N1 OFDM symbols are greater than or equal to a processing time period for receiving the downlink data by the first terminal.

The processing time period includes a demodulation time and a decoding time of the downlink data and a generation time of the feedback signal in response to the downlink data. For the processing time period, when the base station notifies the terminal of information indicating that the downlink data is sent to the first terminal in the n^{th} slot by using downlink control signaling, the processing time period further includes a time for receiving and parsing the downlink control signaling by the first terminal.

Further, the first cell notifies the first terminal of j and k.

Step 3: The first cell sends, in downlink in a (k + 1)^{th} symbol to a (k + X)^{th} symbol, a downlink signal different from the downlink data for the first terminal; receives, in a (j - Y)^{th} symbol to a (j - 1)^{th} symbol, an uplink signal different from the feedback signal that is fed back by the first terminal in response to the downlink data in the n^{th} slot; and does not send any information in remaining symbols, that is, the (k + X)^{th} symbol to the (j - Y)^{th} symbol.

A value of X is any value of 0 to N1, X may include an endpoint value N1, a value of Y is 0 to N1, and Y may include an endpoint value N1.

Step 4: The first cell notifies an information receiving node of information indicating that a signal is sent or received in the (k + 1)^{th} symbol to the (j - 1)^{th} symbol.

The information receiving node may be the first terminal, another terminal served by the current cell, another cell, or another base station.

After obtaining the information, the another cell may determine specific symbols in which the first cell does not send any information, to determine that the symbols are low-interference symbols, and perform measurement by using the symbols or perform high-reliability transmission.

The following provides description by using an example of the first terminal (for example, the UE 1). The following steps are included:
Step 1: The first terminal receives downlink control signaling of the first cell, determines to receive downlink data of the first cell in an n^{th} slot, and feeds back a feedback signal in response to the downlink data in the n^{th} slot.
Step 2: The first terminal receives the downlink data from the first cell in the n^{th} slot, where a last transmission symbol for the downlink data is a k^{th} symbol.
Step 3: The first terminal starts to feed back, in a j^{th} symbol in the n^{th} slot, the feedback signal in response to the downlink data to the first cell.

A time period between the k^{th} OFDM symbol and the j^{th} OFDM symbol is greater than N1 OFDM symbols, and N1 is greater than or equal to 1.

The N1 OFDM symbols are greater than or equal to a processing time period for receiving the downlink data packet by the terminal.

The following provides description by using an example of a second terminal. One of the following steps is included:
Step 1: the second terminal receives a downlink control signal of a first cell, where the control signal notifies the second terminal that the first cell sends, in downlink in a (k + 1)^{th} symbol to a (k + X)^{th} symbol, a downlink signal different from downlink data for the first terminal; that the first cell receives, in a (j - Y)^{th} symbol to a (j - 1)^{th} symbol, an uplink signal different from a feedback signal that is fed back by the first terminal in response to the downlink data in the n^{th} slot; and that the first cell does not send any information in remaining symbols, that is, the (k + X)^{th} symbol to the (j - Y)^{th} symbol; and
Step 2: the second terminal receives, in downlink in the (k + 1)^{th} symbol to the (k + X)^{th} symbol, the downlink signal different from the downlink data for the first terminal; and/or
Step 3: the second terminal sends, in a (j - Y)^{th} symbol to a (j - 1)^{th} symbol, an uplink signal different from the feedback signal that is fed back by the first terminal in response to the downlink data in the n^{th} slot; and
Step 4: perform low-interference measurement in the (k + X)^{th} symbol to the (j - Y)^{th} symbol.

The following provides description by using an example on a side of a second cell (a base station). One of the following steps is included:
Step 1: a second cell receives a signal of a first cell, where the signal notifies the second cell that the first cell does not send any information in a (k + X)^{th} symbol to a (j - Y)^{th} symbol in an n^{th} slot; and/or
Step 2: the second cell configures a terminal served by the second cell, to perform low-interference measurement or communication in the (k + X)^{th} symbol to the (j - Y)^{th} symbol in the n^{th} slot.

It can be learned from the foregoing example description that, in the processing time period of the first terminal device, that is, a (k + 1)^{th} symbol to a (k + N1)^{th} symbol in the n^{th} slot, other data different from the downlink data for the first terminal is sent, other data different from the uplink feedback signal of the first terminal is received, or interference coordination is performed. This not only provides a sufficient processing time period for the terminal, but also improves spectral efficiency and avoids a resource waste. Alternatively, interference management is performed in a time for processing by the first terminal device. This avoids a resource waste.

### Embodiment 2

FIG. 9 is another schematic diagram of an n^{th} slot including a processing time period of a UE 1 according to an embodiment of this application. First, description is provided by using an example of a data transmission process on a side of a base station (or a cell). The following steps are included:
Step 1: Abase station determines to send downlink data to a first terminal in an n^{th} slot, and determines to receive, in the n^{th} slot, a feedback signal sent by the first terminal in response to the downlink data.
Step 2: The base station notifies a terminal of information indicating that the base station sends the downlink data to the first terminal in the n^{th} slot, and instructs the terminal to send a feedback signal for the downlink data to the base station in the n^{th} slot.
   A time period between an end time (a k^{th} OFDM symbol) at which the downlink data is sent and a start time (a j^{th} OFDM symbol) at which the feedback signal in response to the downlink data is received is greater than N1 OFDM symbols, and N1 is greater than or equal to 1.
   The N1 OFDM symbols are greater than or equal to a processing time period for receiving the downlink data by the first terminal.
   The processing time period includes a demodulation time and a decoding time of the downlink data and a generation time of the feedback signal in response to the downlink data.
Step 3: The base station sends a data packet of a second terminal in downlink in a (k + 1)^{th} symbol to a (k + N1)^{th} symbol.
Step 4: The base station notifies the second terminal of information indicating that the data packet of the second terminal is sent in the (k + 1)^{th} symbol to the (k + N1)^{th} symbol in the n^{th} slot.

The following provides description by using an example on a side of a first terminal. The following steps are included:
Step 1: The first terminal receives downlink control signaling from a base station, determines to receive downlink data from a base station in an n^{th} slot, and feeds back a feedback signal in response to the downlink data in the n^{th} slot.
Step 2: The first terminal receives the downlink data from the base station in the n^{th} slot, where a last transmission symbol for the downlink data is a k^{th} symbol.
Step 3: The first terminal starts to feed back, in a j^{th} symbol in the n^{th} slot, the feedback signal in response to the downlink data to the base station.

A time period between the k^{th} OFDM symbol and the j^{th} OFDM symbol is greater than N1 OFDM symbols, and N1 is greater than or equal to 1.

The N1 OFDM symbols are greater than or equal to a processing time period for receiving the downlink data packet by the terminal.

The following provides description by using an example on a side of a second terminal. The following steps are included:
Step 1: A second terminal obtains a downlink control signal from a base station, where the control signal notifies the second terminal that the base station receives downlink data in a (k + 1)^{th} symbol to a (k + N1)^{th} symbol in an n^{th} slot.
Step 2: The second terminal receives the downlink data in the (k + 1)^{th} symbol to the (k + N1)^{th} symbol in the n^{th} slot.

It can be learned from the foregoing example description that, in a processing time period of the first terminal device, that is, the (k + 1)^{th} symbol to the (k + N1)^{th} symbol in the n^{th} slot, other data different from downlink data for the first terminal is sent, for example, the downlink data sent to the second terminal is sent. This not only provides a sufficient processing time period for the first terminal, but also avoids a resource waste.

### Embodiment 3

FIG. 10 is another schematic diagram of an n^{th} slot including a processing time period of a UE 1 according to an embodiment of this application. First, description is provided by using an example of a data transmission process on a side of a base station. The following steps are included.

Step 1: Abase station determines to send downlink data to a first terminal in an n^{th} slot, and determines to receive, in the n^{th} slot, a feedback signal sent by the first terminal in response to the downlink data.

Step 2: The base station notifies a terminal of information indicating that the base station sends the downlink data to the first terminal in the n^{th} slot, and instructs the terminal to send a feedback signal for the downlink data to the base station in the n^{th} slot.

A time period between an end time (a k^{th} OFDM symbol) at which the downlink data is sent and a start time (a j^{th} OFDM symbol) at which the feedback signal in response to the downlink data is received is greater than N1 OFDM symbols, and N1 is greater than or equal to 1.

The N1 OFDM symbols are greater than or equal to a processing time period for receiving the downlink data by the first terminal.

The processing time period includes a demodulation time and a decoding time of the downlink data and a generation time of the feedback signal in response to the downlink data.

Step 3: The base station determines to receive, in a (j - N1)^{th} symbol to a (j - 1)^{th} symbol, another signal different from the feedback signal that is sent by the first terminal in response to the downlink data.

The signal may be an uplink reference signal, another uplink signal of the first terminal, or an uplink signal of another terminal.

The uplink reference signal may be an uplink demodulation reference signal DMRS, or may be an uplink sounding reference signal SRS.

The uplink reference signal may be sent by the first terminal, or may be sent by another terminal.

The another uplink signal of the first terminal includes, for example, uplink data of the first terminal and an uplink channel state information feedback of the first terminal.

The uplink signal of the another terminal includes, for example, a reference signal, uplink data, uplink channel state feedback information, and an uplink feedback signal.

Step 4: The base station notifies a corresponding terminal of information indicating that a signal is to be received in the (j - N1)^{th} symbol to the (j - 1)^{th} symbol in the n^{th} slot.

The following provides description by using an example on a side of a first terminal. The following steps are included:
Step 1: A first terminal receives downlink control signaling from a base station, determines to receive downlink data from the base station in an n^{th} slot, and feeds back a feedback signal in response to the downlink data in the n^{th} slot.
Step 2: The first terminal receives the downlink data from the base station in the n^{th} slot, where a last transmission symbol for the downlink data is a k^{th} symbol.

The first terminal starts to feed back, in a j^{th} symbol in the n^{th} slot, the feedback signal in response to the downlink data to the base station.

A time period between the k^{th} OFDM symbol and the j^{th} OFDM symbol is greater than N1 OFDM symbols, and N1 is greater than or equal to 1.

The N1 OFDM symbols are greater than or equal to a processing time period for receiving the downlink data packet by the terminal.

The following provides description by using an example on a side of a second terminal. The following steps are included:
Step 1: A second terminal obtains a downlink control signal from a base station, where the control signal notifies the second terminal that the base station receives downlink data in a (k + 1)^{th} symbol to a (k + N1)^{th} symbol in an n^{th} slot.
Step 2: The second terminal receives the downlink data in the (k + 1)^{th} symbol to the (k + N1)^{th} symbol in the n^{th} slot.

It can be learned from the foregoing example description that, in a processing time period of a first terminal device, that is, a (j - N1)^{th} symbol to the (j - 1)^{th} symbol in the n^{th} slot, other data that is different from downlink data for the first terminal and a feedback signal of the first terminal is sent. For example, an SRS is sent. This not only provides a sufficient processing time period for the first terminal, but also avoids a resource waste.

### Embodiment 4

FIG. 11 is another schematic diagram of an n^{th} slot including a processing time period of a UE 1 according to an embodiment of this application. First, description is provided by using an example of a data transmission process on a side of a base station. The following steps are included.

Step 1: Abase station determines to send downlink data to a first terminal in an n^{th} slot, and determines to receive, in the n^{th} slot, a feedback signal sent by the first terminal in response to the downlink data.

Step 2: The base station notifies a terminal of information indicating that the base station sends the downlink data to the first terminal in the n^{th} slot, and instructs the terminal to send a feedback signal for the downlink data to the base station in the n^{th} slot.

A time period between an end time (a k^{th} OFDM symbol) at which the downlink data is sent and a start time (a j^{th} OFDM symbol) at which the feedback signal in response to the downlink data is received is greater than N1 OFDM symbols, and N1 is greater than or equal to 1.

The N1 OFDM symbols are greater than or equal to a processing time period for receiving the downlink data by the first terminal.

The processing time period includes a demodulation time and a decoding time of the downlink data and a generation time of the feedback signal in response to the downlink data.

Step 3: The base station sends a reference signal in downlink in a (k + 1)^{th} symbol to a (k + N1)^{th} symbol.

The reference signal may be a CSI-RS signal, for example, a CSI-RS signal of the first terminal, a CSI-RS signal of another terminal, a cell-specific CSI-RS signal, or a beam-specific CSI-RS signal.

Alternatively, the reference signal may be a reference signal used for phase tracking, a reference signal used for timing, or a reference signal used for frequency synchronization.

The reference signal may be a reference signal to be sent to one terminal, or may be a reference signal to be sent to a plurality of terminals.

Step 4: The base station notifies the terminal of information about a reference signal sending location.

The terminal may be the first terminal or another terminal.

Specifically, the base station may notify the terminal by using UE-specific dynamic signaling or higher layer signaling, or according to a predefined rule.

The predefined rule may be a rule pre-agreed on by the base station with the terminal. For example, the base station and the terminal agree on that, if the base station works in a self-contained mode, after the downlink PDSCH, N1 OFDM symbols are used by default to carry the CSI-RS.

The following provides description by using an example on a side of a first terminal. The following steps are included:
Step 1: A first terminal receives downlink control signaling from a base station, determines to receive downlink data from the base station in an n^{th} slot, and feeds back a feedback signal in response to the downlink data in the n^{th} slot.
Step 2: The first terminal receives the downlink data from the base station in the n^{th} slot, where a last transmission symbol for the downlink data is a k^{th} symbol.

The first terminal starts to feed back, in a j^{th} symbol in the n^{th} slot, the feedback signal in response to the downlink data to the base station.

A time period between the k^{th} OFDM symbol and the j^{th} OFDM symbol is greater than N1 OFDM symbols, and N1 is greater than or equal to 1.

The N1 OFDM symbols are greater than or equal to a processing time period for receiving the downlink data packet by the terminal.

The following provides description by using an example on a side of a second terminal. One of the following steps is included:
Step 1: A second terminal obtains a downlink control signal from a base station, where the control signal notifies the second terminal that the second terminal sends a reference signal in a (k + 1)^{th} symbol to a (k + N1)^{th} symbol in an n^{th} slot.
Step 2: The second terminal receives the reference signal in the (k + 1)^{th} symbol to the (k + N1)^{th} symbol in the n^{th} slot.

It can be learned from the foregoing example description that, in a processing time period of the first terminal device, that is, the (k + 1)^{th} symbol to the (k + N1)^{th} symbol in the n^{th} slot, other data different from downlink data of the first terminal is sent, for example, the reference signal is sent. This not only provides a sufficient processing time period for a terminal, but also improves spectral efficiency and avoids a resource waste.

### Embodiment 5

In the foregoing embodiment, N1 OFDM symbols are used to indicate a processing time period of a first terminal, duration of one OFDM symbol is related to a parameter used in the slot, and a value of the OFDM symbol is determined in the following manner:

One OFDM duration is defined based on at least one of a parameter of a PDCCH carrying downlink control signaling, a parameter of a PDSCH carrying downlink data, or a parameter of an uplink channel carrying ACK/NACK.
1. If the PDCCH carrying the downlink control signaling, the PDSCH carrying the downlink data, and the uplink channel carrying the ACK/NACK have a same parameter, the OFDM symbol is determined based on the parameter of the uplink channel.
   The parameter of the uplink channel is also referred to as numerology, and mainly refers to a subcarrier spacing SCS.
   For example, if the PDCCH carrying the downlink control signaling, the PDSCH carrying the downlink data, and the parameter of the uplink channel carrying the ACK/NACK all include a subcarrier spacing of 15 kHz, one OFDM symbol is an OFDM symbol corresponding to one subcarrier spacing of 15 kHz.
2. If the parameter of the PDSCH carrying the downlink data is different from the parameter of the uplink channel carrying the ACK/NACK, there are a plurality of implementations as follows:
   (1) Definition is performed based on duration of a maximum SCS, that is, shortest OFDM symbol duration, in the parameter of the PDSCH carrying downlink data and the parameter of the uplink channel carrying the ACK/NACK, and therefore a smaller granularity may be defined. This can avoid a resource waste caused by a granularity mismatch.
   (2) N1 is defined based on the parameter of the uplink channel of the PDSCH carrying the downlink data. Because a processing time period of a UE is related to an SCS of the PDSCH, and a larger SCS indicates a smaller processing time period, a processing time period is estimated more accurately.
   (3) A reference SCS is defined based on an OFDM corresponding to a reference SCS. Therefore, the reference SCS may be defined based on the foregoing embodiment and a signal transmitted in an actual processing time period of the UE, to facilitate resource sharing.
   (4) Definition is performed based on a parameter of an uplink channel carrying the ACK/NACK. In this way, complexity of parameter configuration of the first terminal can be reduced.

Further, the terminal determines processing time periods of the terminal in different scenarios, and reports the processing time periods to the base station in a unit of OFDM symbols.

The OFDM symbol may be determined based on one or more of the parameter of the PDCCH carrying the downlink control signaling, the parameter of the PDSCH carrying the downlink data, or the parameter of the uplink channel carrying the ACK/NACK.

The scenario includes one or a combination of the parameter of the PDCCH carrying the downlink control signaling, the parameter of the PDSCH carrying the downlink data, and the parameter of the uplink channel carrying the ACK/NACK.

### Embodiment 6

FIG. 12 is a schematic diagram of CSI-RS transmission in an n^{th} slot according to an embodiment of this application. If a base station is configured with an operation mode of a self-contained frame structure, in a slot including uplink and downlink switching, a CSI-RS is transmitted in K1 symbols (OFDM Symbol, OS) between uplink and downlink switching.

FIG. 13 is a schematic diagram of SRS transmission in an n^{th} slot according to an embodiment of this application. If a base station is configured with an operation mode of a self-contained frame structure, in a slot including uplink and downlink switching, an SRS signal is transmitted in K2 symbols that elapse after uplink and downlink switching starts.

FIG. 14 is a schematic diagram of a case of no signal transmission in K3 symbols in an n^{th} slot according to an embodiment of this application. If a base station is configured with an operation mode of a self-contained frame structure, in a slot including uplink and downlink switching, no signal transmission is performed in K3 symbols between uplink and downlink switching, and K3 is notified to a neighboring base station, to be used for low-interference measurement.

The base station may notify the terminal and/or another base station of the configuration. A notification method is as follows:
In the n^{th} slot, a symbol 0 to a symbol (j1 - 1) are symbols for a DL PDCCH/PDSCH. A symbol j 1 to a symbol (j2 - 1) are symbols for a CSI-RS, that is, symbols in which CSI-RS transmission is performed in K1 symbols. When a symbol j2 to a symbol (j3 - 1) are null symbols, no signal transmission is performed, that is, K3 symbols are null symbols. A symbol j3 to a symbol j4 are symbols for an SRS, that is, symbols in which SRS transmission is performed in K2 symbols. A symbol j4 to a symbol (j5 - 1) are symbols for an uplink PUCCH.

The base station may notify the configuration in a semi-static notification manner by using higher layer signaling, or may notify the configuration by using dynamic signaling. The foregoing plurality of options may be notified in one piece of signaling/one message or more pieces of signaling/more messages. Alternatively, different numbers are defined for different parameter combinations, and identification is performed by using the numbers. Alternatively, one format or a set of several formats is predefined, and when the base station determines that the base station is in a self-contained operation mode, the format is notified to the terminal and/or the another base station.

It can be learned from the foregoing example description that a signal is sent in a time for processing by a first terminal device. This avoids a resource waste. The base station preset frame structure configuration of a self-contained mode, and some signaling redundancy can be reduced by using configuration information.

### Embodiment 7

FIG. 15 is a schematic diagram of CSI-RS transmission in an n^{th} slot and CQI transmission in an (n + 1)^{th} slot according to an embodiment of this application. If a base station is configured with an operation mode of a self-contained frame structure, a CSI-RS is sent in at least N1 OFDM symbols in an n^{th} uplink and downlink switching slot, and at least N1 OFDM symbols in an uplink and downlink switching slot that is immediately after the n^{th} uplink and downlink switching slot are used to transmit a channel measurement feedback signal in response to the CSI-RS.

It can be learned from the foregoing example description that a signal is sent in a time for processing by a first terminal device. This avoids a resource waste. In this embodiment, one uplink and downlink switching slot is used for downlink transmission, and another uplink and downlink switching slot is used for uplink transmission. This reduces a CQI feedback delay while implementing the self-contained operation mode.

### Embodiment 8

FIG. 16 is a schematic diagram of a processing time period for uplink processing by a UE 1 in an n^{th} slot according to an embodiment of this application. In the foregoing embodiment, N1 is defined as a processing time period between receiving downlink data by a terminal and sending an uplink feedback by the terminal. Further, this embodiment of this application is not limited to this scenario. For example, in an uplink self-contained operation mode, N2 is defined as a processing time period between receiving uplink scheduling signaling by the terminal and sending, by the terminal, uplink data scheduled by using the uplink scheduling signaling. Similarly, other data different from the scheduled uplink data may be transmitted in N2 OFDM symbols.

It can be learned from the foregoing example that a reference signal is sent in a time for processing by a first terminal device. This avoids a resource waste. If the processing time period of the first terminal is N1 OFDM symbols, the N1 OFDM symbols are used to transmit downlink data for the first terminal and another signal different from the feedback signal that is sent by the first terminal in response to the downlink data; or a first cell does not transmit information in the N1 OFDM symbols, and information indicating no transmission is notified to another terminal or a base station, for interference measurement. A low-delay self-contained operation is performed without reducing spectral efficiency.

FIG. 17 is a schematic diagram of downlink transmission in a plurality of slots according to an embodiment of this application. For example, transmission is performed in a plurality of consecutive downlink slots. For example, when downlink transmission is performed in both an (n1)^{th} slot and an (n2)^{th} slot, a base station sends downlink channel signaling in the (n1)^{th} slot, and sends a feedback signal in the (n2)^{th} slot. FIG. 18 is a schematic diagram of transmission in a plurality of consecutive uplink slots according to an embodiment of this application. A base station may schedule a plurality of uplink transmissions in uplink control signaling in an (n1)^{th} slot. For example, when uplink transmission is performed in both an (n1)^{th} and an (n2)^{th} slot, the base station may send uplink scheduling in the (n1)^{th} slot, and transmit uplink data in the (n1)^{th} slot and the (n2)^{th} slot.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by a person skilled in the art that the embodiments described in this specification all belong to preferred embodiments, and the actions and modules are not necessarily required by this application.

To better implement the foregoing solutions in the embodiments of this application, the following further provides a related apparatus configured to implement the foregoing solutions.

Referring to FIG. 19, an embodiment of this application provides a network device. The network device is specifically a first network device 1900, and the first network device 1900 includes a time period determining module 1901 and a sending module 1902.

The time period determining module 1901 is configured to: determine to send first downlink data to a first terminal device in a first time period in a first time unit, and receive, in a second time period in the first time unit, a feedback signal sent by the first terminal device in response to a status of receiving the first downlink data.

The sending module 1902 is configured to: send first signaling to the first terminal device. The first signaling is used to indicate that the first network device sends the first downlink data in the first time period in the first time unit, and receives, in the second time period in the first time unit, the feedback signal sent by the first terminal in response to the first downlink data.

The time period determining module 1901 is further configured to determine a third time period from the first time unit. A start point of the third time period is an end time of the first time period, and an end point of the third time period is a start time of the second time period.

The sending module 1902 is further configured to perform at least one of the following operations:
sending second signaling to a target device, where the second signaling indicates that the first network device sends a first target signal in a fourth time period in the third time period;
sending third signaling to a target device, where the third signaling indicates that the first network device receives, in a fifth time period in the third time period, a second target signal sent by the target device; or
sending fourth signaling to a target device, where the fourth signaling indicates that the first network device does not send any signal in a sixth time period in the third time period, and that the first network device does not configure a terminal device served by the first network device to send any signal in the fourth time period.

The third time period includes at least one of the following time periods: the fourth time period, the fifth time period, and the sixth time period; the target device includes at least one of the following devices: the first terminal device, a second terminal device, and a second network device; the first network device provides a communications service for the second terminal device and the first terminal device; and the second network device is a neighboring network device of the first network device.

In some embodiments of this application, the time period determining module 1901 is specifically configured to determine the third time period based on a downlink processing time period for processing the first downlink data by the first terminal device.

Referring to FIG. 20, an embodiment of this application provides a network device. The network device is specifically a first network device 2000, and the first network device 2000 includes a sending module 2001 and a time period determining module 2002.

The sending module 2001 is configured to send first signaling to a first terminal device in a first time period in a first time unit, where the first signaling indicates that the first network device receives first uplink data in a second time period in the first time unit.

The time period determining module 2002 is configured to determine a third time period from the first time unit, where a start point of the third time period is an end time of the first time period, and an end point of the third time period is a start time of the second time period.

The sending module 2001 is further configured to perform at least one of the following operations:
sending second signaling to a target device, where the second signaling indicates that the first network device sends a first target signal in a fourth time period in the third time period;
sending third signaling to a target device, where the third signaling indicates that the first network device receives, in a fifth time period in the third time period, a second target signal sent by the target device; or
sending fourth signaling to a target device, where the fourth signaling indicates that the first network device does not send any signal in a sixth time period in the third time period, or configure a terminal device served by the first network device to send any signal in the sixth time period.

The third time period includes at least one of the following time periods: the fourth time period, the fifth time period, and the sixth time period; the target device includes at least one of the following devices: the first terminal device, a second terminal device, and a second network device; the first network device provides a communications service for the second terminal device and the first terminal device; and the second network device is a neighboring network device of the first network device.

In some embodiments of this application, the time period determining module 2002 is specifically configured to determine the third time period based on an uplink processing time period for processing the first uplink data by the first terminal device.

In some embodiments of this application, the first time unit includes L symbols, the end time of the first time period is a k^{th} symbol in the L symbols, the start time of the second time period is a j^{th} symbol in the L symbols, and the third time period includes all symbols from a (k + 1)^{th} symbol to a (j - 1)^{th} symbol in the L symbols.

In some embodiments of this application, as shown in FIG. 20-b, the first network device 2000 further includes a first receiving module 2003 and a silence module 2004.

The sending module 2001 is further configured to: when the fourth time period includes a (k + 1)^{th} symbol to a (k + X)^{th} symbol, send the first target signal to the target device in the (k + 1)^{th} symbol to the (k + X)^{th} symbol.

The first receiving module 2003 is configured to: when the fifth time period includes a (j - Y)^{th} symbol to a (j - 1)^{th} symbol, send a second target signal to the first network device in the (j - Y)^{th} symbol to the (j - 1)^{th} symbol.

The silence module 2004 is configured to: when the sixth time period includes a (k + X + 1)^{th} symbol to a (j - Y - 1)^{th} symbol, determine that the first network device does not transmit any signal in the (k + X + 1)^{th} symbol to the (j - Y - 1)^{th} symbol, and that the first network device does not configure a terminal device served by the first network device to send any signal in the (k + X + 1)^{th} symbol to the (j - Y - 1)^{th} symbol.

L, k, j, X, and Y all are non-negative integers, and j is greater than k.

In some embodiments of this application, the downlink processing time period is N1 symbols, and (j - k - 1) is greater than N1; or
the uplink processing time period is N2 symbols, and (j - k - 1) is greater than N2.

In some embodiments of this application, X is equal to N1;
Y is equal to N1;
X is equal to N2; or
Y is equal to N2.

In some embodiments of this application, the first signaling includes physical layer control signaling, semi-persistent scheduling SPS signaling, media access control MAC layer signaling, or higher layer signaling;
the second signaling includes physical layer control signaling, SPS signaling, MAC layer signaling, or higher layer signaling;
the third signaling includes physical layer control signaling, SPS signaling, MAC layer signaling, or higher layer signaling; or
the fourth signaling includes physical layer control signaling, SPS signaling, MAC layer signaling, higher layer signaling, or interface signaling between base stations.

In some embodiments of this application, as shown in FIG. 20-c, the first network device 2000 further includes:
a symbol duration determining module 2005, configured to: separately obtain a parameter of a downlink control channel used to carry the first signaling, a parameter of a downlink shared channel used to carry the first downlink data, and a parameter of an uplink channel used to carry the feedback signal; and when the first time period, the second time period, the third time period, the fourth time period, the fifth time period, and the sixth time period are counted in a form of orthogonal frequency division multiplexing OFDM symbols, determine duration of a single symbol that is in the first time unit, based on at least one of the following parameters: the parameter of the downlink control channel used to carry the first signaling, the parameter of the downlink shared channel used to carry the first downlink data, the parameter of the uplink channel used to carry the feedback signal, or a predefined reference parameter.

In some embodiments of this application, the symbol duration determining module 2005 is specifically configured to: when the parameter of the downlink control channel, the parameter of the downlink shared channel, and the parameter of the uplink channel include a same subcarrier spacing, use duration of an orthogonal frequency division multiplexing OFDM symbol corresponding to the same subcarrier spacing as the duration of the single symbol in the first time unit; when the parameter of the downlink shared channel and the parameter of the uplink channel include different subcarrier spacings, determine a maximum subcarrier spacing from the parameter of the downlink shared channel and the parameter of the uplink channel, and use, by the first network device, duration of an OFDM symbol corresponding to the maximum subcarrier spacing as the duration of the single symbol in the first time unit; when the parameter of the downlink shared channel and the parameter of the uplink channel include different subcarrier spacings, use duration of an OFDM symbol corresponding to a subcarrier spacing of the downlink shared channel as the duration of the single symbol in the first time unit; when the parameter of the downlink shared channel and the parameter of the uplink channel include different subcarrier spacings, use an OFDM symbol corresponding to the reference parameter as the duration of the single symbol in the first time unit; or when the parameter of the downlink shared channel and the parameter of the uplink channel include different subcarrier spacings, use duration of an OFDM symbol corresponding to one subcarrier spacing in the parameter of the uplink channel as the duration of the single symbol in the first time unit.

In some embodiments of this application, the first target signal includes: a channel state information reference signal CSI-RS used for beam management, a CSI-RS used for channel quality feedback, a CSI-RS used for mobility management, a reference signal used for phase tracking, a reference signal used for time synchronization, and a reference signal used for frequency synchronization.

In some embodiments of this application, the first target signal includes: second downlink data sent to the second terminal device or third downlink data that is sent to the first terminal device and for which feedback does not need to be performed in the first time unit.

In some embodiments of this application, the second target signal includes: an uplink signal that is sent by the target device and that is different from the feedback signal, or another uplink signal that is sent by the target device and that is different from the first uplink data.

In some embodiments of this application, as shown in FIG. 20-d, the first network device 2000 further includes a second receiving module 2006.

The second receiving module 2006 is further configured to: when the first target signal is a CSI-RS, receive, in a seventh time period in a second time unit, channel quality feedback information from the target device in response to the CSI-RS. The second time unit is a time unit that is after the first time unit and that includes uplink and downlink switching; and the seventh time period is a time period that is in a second time unit and that is before an uplink feedback signal is sent.

Referring to FIG. 21, an embodiment of this application provides a terminal device. The terminal device is specifically a first terminal device 2100, and the first terminal device includes a determining module 2101 and a receiving module 2102.

The determining module 2101 is configured to determine a first time unit used to receive first downlink data.

The receiving module 2102 is configured to receive first signaling sent by a first network device. The first signaling indicates that the first terminal receives, in a first time period in the first time unit, first downlink data sent by a first network device, and sends, in a second time period in the first time unit, a feedback signal in response to the first downlink data.

The determining module 2101 is configured to determine a third time period from the first time unit. A start point of the third time period is an end time of the first time period, and an end point of the third time period is a start time of the second time period.

The third time period is greater than or equal to a downlink processing time period for processing the first downlink data by the first terminal device.

An embodiment of this application provides a terminal device. The terminal device is specifically a first terminal device, and the first terminal device includes a determining module and a receiving module.

The determining module is configured to determine a first time unit used to receive uplink data.

The sending module is configured to receive, in a first time period in the first time unit, first signaling sent by a first terminal device. The first signaling indicates that the first terminal device sends first uplink data in a second time period in the first time unit.

The determining module is further configured to determine a third time period from the first time unit. A start point of the third time period is an end time of the first time period, and an end point of the third time period is a start time of the second time period.

The third time period is greater than or equal to an uplink processing time period for processing the first uplink data by the first terminal device.

In some embodiments of this application, the first time unit includes L symbols, the end time of the first time period is a k^{th} symbol in the L symbols, the start time of the second time period is a j^{th} symbol in the L symbols, and the third time period includes all symbols from a (k + 1)^{th} symbol to a (j - 1)^{th} symbol in the L symbols.

L, k, and j all are non-negative integers, and j is greater than k.

Referring to FIG. 22-a, an embodiment of this application provides a terminal device 2200. The terminal device 2200 includes a determining module 2201, a first receiving module 2202, a second receiving module 2203, and a third receiving module 2204.

The determining module 2201 is configured to determine a third time period from a first time unit. The third time period is a period of time in the first time unit.

The first receiving module 2202 is configured to: receive second signaling sent by a first network device, and determine, based on the second signaling, that the first network device sends a first target signal in a fourth time period in the third time period.

The second receiving module 2203 is configured to: receive third signaling sent by the first network device, and determine, based on the third signaling, that the terminal device sends a second target signal in a fifth time period in the third time period.

The third receiving module 2204 is configured to: receive fourth signaling sent by the first network device, and determine, based on the fourth signaling, that the first network device does not transmit a signal in a sixth time period in the third time period.

The third time period includes at least one of the following time periods: the fourth time period, the fifth time period, and the sixth time period.

In some embodiments of this application, the first time unit includes L symbols, and the third time period includes all symbols from a (k + 1)^{th} symbol to a (j - 1)^{th} symbol in the L symbols.

Referring to FIG. 22-b, the terminal device 2200 further includes a fourth receiving module 2205 and a sending module 2206.

The fourth receiving module 2205 is configured to: when the fourth time period includes a (k + 1)^{th} symbol to a (k + X)^{th} symbol, receive, in the (k + 1)^{th} symbol to the (k + X)^{th} symbol, the first target signal sent by the first network device.

The sending module 2206 is configured to: when the fifth time period includes a (j - Y)^{th} symbol to a (j - 1)^{th} symbol, send a second target signal to the first network device in the (j - Y)^{th} symbol to the (j - 1)^{th} symbol.

L, k, j, X, and Y all are non-negative integers, and j is greater than k.

Referring to FIG. 23, an embodiment of this application provides a network device. The network device is specifically a second network device 2300, and the second network device includes a receiving module 2301, a determining module 2302, and a processing module 2303.

The receiving module 2301 is configured to receive fourth signaling sent by a first network device.

The determining module 2302 is configured to determine, based on the fourth signaling, that the first network device does not send any signal in a sixth time period in the first time period, and that the first network device does not configure a terminal device served by the first network device to send any signal in the fourth time period.

The processing module 2303 is configured to perform channel state measurement or data transmission in all or some time periods in the sixth time period.

In some embodiments of this application, the first time unit includes L symbols, and the sixth time period includes all symbols from a (k + 1)^{th} symbol to a (j - 1)^{th} symbol in the L symbols.

The determining module 2302 is specifically configured to: when the sixth time period includes a (k + X + 1)^{th} symbol to a (j - Y - 1)^{th} symbol, determine that the first network device does not transmit any signal in the (k + X + 1)^{th} symbol to the (j - Y - 1)^{th} symbol, and that the first network device does not configure a terminal device served by the first network device to send any signal in the (k + X + 1)^{th} symbol to the (j - Y - 1)^{th} symbol.

L, k, j, X, and Y all are non-negative integers, and j is greater than k.

It should be noted that content such as information exchange between the modules/units of the apparatus and the execution processes thereof is based on the same idea as the method embodiments of this application, and produces the same technical effects as the method embodiments of this application. For the specific content, refer to the foregoing description in the method embodiments of this application, and details are not described herein again.

An embodiment of this application further provides a computer storage medium. The computer storage medium stores a program. During execution of the program, some or all of the steps recorded in the foregoing method embodiments are performed.

The following describes another network device provided in an embodiment of this application. Referring to FIG. 24, a network device 2400 includes:
a receiver 2401, a transmitter 2402, a processor 2403, and a memory 2404 (there may be one or more processors 2403 in the network device 2400, and an example in which there is one processor is used in FIG. 24). In some embodiments of this application, the receiver 2401, the transmitter 2402, the processor 2403, and the memory 2404 may be connected by using a bus or in another manner. FIG. 24 shows an example of a connection by using the bus.

The memory 2404 may include a read-only memory and a random access memory, and provide an instruction and data to the processor 2403. A part of the memory 2404 may further include a non-volatile random access memory (English full name: Non-Volatile Random Access Memory, NVRAM for short). The memory 2404 stores an operating system and an operation instruction, an executable module or a data structure, a subnet thereof, or an extended set thereof. The operation instruction may include various operation instructions to implement various operations. The operating system may include various system programs to implement various basic services and process hardware-based tasks.

The processor 2403 controls operations of the network device, and the processor 2403 may also be referred to as a central processing unit (English full name: Central Processing Unit, CPU for short). In a specific application, components of the network device are coupled together by using a bus system. In addition to a data bus, the bus system may further include a power bus, a control bus, a status signal bus, and the like. However, for clear description, various types of buses in the figure are marked as the bus system.

The method disclosed in the embodiments of this application may be applied to a processor 2403 or may be implemented by a processor 2403. The processor 2403 may be an integrated circuit chip and has a signal processing capability. In an implementation process, the steps in the foregoing methods can be implemented by using a hardware integrated logic circuit in the processor 2403, or by using instructions in a form of software. The processor 2403 may be a general purpose processor, a digital signal processor (English full name: digital signal processing, DSP for short), an application-specific integrated circuit (English full name: Application Specific Integrated Circuit, ASIC for short), a field-programmable gate array (English full name: Field-Programmable Gate Array, FPGA for short) or another programmable logic device, a discrete gate or transistor logic device, or a discrete hardware component; and may implement or perform the methods, the steps, and logical block diagrams that are disclosed in the embodiments of this application. The general purpose processor may be a microprocessor, or the processor may be any conventional processor or the like. Steps of the methods disclosed with reference to the embodiments of this application may be directly executed and accomplished by using a hardware decoding processor, or may be executed and accomplished by using a combination of hardware and software modules in the decoding processor. A software module may be located in a storage medium mature in the art, such as a random access memory, a flash memory, a read-only memory, a programmable read-only memory, an electrically erasable programmable memory, or a register. The storage medium is located in the memory 2404, and the processor 2403 reads information in the memory 2404 and completes the steps in the foregoing methods in combination with hardware of the processor 2403.

The receiver 2401 may be configured to: receive input digital or character information, and generate a signal input related to a related setting and function control of a network device. The transmitter 2402 may include a display device such as a display screen, and the transmitter 2402 may be configured to output digital or character information by using an external interface.

In this embodiment of this application, the processor 2403 is configured to perform the foregoing data transmission method performed by the first network device or the second network device.

The following describes another terminal device provided in an embodiment of this application. Referring to FIG. 25, a terminal device 2500 includes:
a receiver 2501, a transmitter 2502, a processor 2503, and a memory 2504 (there may be one or more processors 2503 in the terminal device 2500, and an example in which there is one processor is used in FIG. 25). In some embodiments of this application, the receiver 2501, the transmitter 2502, the processor 2503, and the memory 2504 may be connected by using a bus or in another manner. FIG. 25 shows an example of a connection by using the bus.

The memory 2504 may include a read-only memory and a random access memory, and provide an instruction and data for the processor 2503. A part of the memory 2504 may further include an NVRAM. The memory 2504 stores an operating system and an operation instruction, an executable module or a data structure, a subnet thereof, or an extended set thereof. The operation instruction may include various operation instructions to implement various operations. The operating system may include various system programs to implement various basic services and process hardware-based tasks.

The processor 2503 controls operations of the terminal device, and the processor 2503 may also be referred to as a CPU. In a specific application, components of the terminal device are coupled together by using a bus system. In addition to a data bus, the bus system includes a power bus, a control bus, a status signal bus, and the like. However, for clear description, various types of buses in the figure are marked as the bus system.

The method disclosed in the embodiments of this application may be applied to a processor 2503 or may be implemented by a processor 2503. The processor 2503 may be an integrated circuit chip and has a signal processing capability. In an implementation process, steps in the foregoing methods can be implemented by using a hardware integrated logic circuit in the processor 2503, or by using instructions in a form of software. The foregoing processor 2503 may be a general purpose processor, a DSP, an ASIC, an FPGA or another programmable logic device, a discrete gate or transistor logic device, or a discrete hardware component. It may implement or perform the methods, the steps, and logical block diagrams that are disclosed in the embodiments of this application. The general purpose processor may be a microprocessor, or the processor may be any conventional processor or the like. Steps of the methods disclosed with reference to the embodiments of this application may be directly executed and accomplished by using a hardware decoding processor, or may be executed and accomplished by using a combination of hardware and software modules in the decoding processor. A software module may be located in a storage medium mature in the art, such as a random access memory, a flash memory, a read-only memory, a programmable read-only memory, an electrically erasable programmable memory, or a register. The storage medium is located in the memory 2504, and the processor 2503 reads information in the memory 2504 and completes the steps in the foregoing methods in combination with hardware of the processor.

In this embodiment of this application, the processor 2503 is configured to perform the foregoing data transmission method performed by the first terminal device or the second terminal device.

In addition, it should be noted that the described apparatus embodiment is merely an example. The units described as separate parts may or may not be physically separate, and components displayed as units may or may not be physical units, may be located in one position, or may be distributed on a plurality of network units. Some or all of the modules may be selected based on actual needs to achieve the objectives of the solutions of the embodiments. In addition, in the accompanying drawings of the apparatus embodiments provided by this application, connection relationships between modules indicate that the modules are in communication connections with each other, which may be specifically implemented as one or more communications buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, specific hardware structures used to achieve a same function may be in various forms, for example, in a form of an analog circuit, a digital circuit, and a dedicated circuit. However, for this application, software program implementation is a better implementation in most cases. Based on such an understanding, the technical solutions of this application essentially or the part contributing to the prior art may be implemented in a form of a software product. The software product is stored in a readable storage medium, such as a floppy disk, a USB flash drive, a removable hard disk, a read-only memory (ROM, Read-Only Memory), a random access memory (RAM, Random Access Memory), a magnetic disk, or an optical disc of a computer, and includes several instructions for instructing a computer device (which may be a personal computer, a server, a network device, or the like) to perform the methods described in the embodiments of this application.

All or some of the foregoing embodiments may be implemented by using software, hardware, firmware, or any combination thereof. When software is used to implement the embodiments, the embodiments may be implemented completely or partially in a form of a computer program product.

The computer program product includes one or more computer instructions. When the computer program instructions are loaded and executed on the computer, all or some of the procedures or functions are generated according to the embodiments of this application. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

## Claims

1. A data transmission method, comprising:
determining to send first downlink data to a first terminal device in a first time period in a first time unit, and receive, in a second time period in the first time unit, a feedback signal sent by the first terminal device in response to a status of receiving the first downlink data;
sending first signaling to the first terminal device, wherein the first signaling is used to indicate that a first network device sends the first downlink data in the first time period in the first time unit and receives the feedback signal in the second time period in the first time unit;
determining a third time period from the first time unit, wherein a start point of the third time period is an end time of the first time period, and an end point of the third time period is a start time of the second time period; and
performing at least one of the following operations:
sending second signaling to a target device, wherein the second signaling indicates that the first network device sends a first target signal in a fourth time period in the third time period;
sending third signaling to a target device, wherein the third signaling indicates that the first network device receives, in a fifth time period in the third time period, a second target signal sent by the target device; or
sending fourth signaling to a target device, wherein the fourth signaling indicates that the first network device does not send any signal in a sixth time period in the third time period, and that the first network device does not configure a terminal device served by the first network device to send any signal in the sixth time period; wherein
the third time period comprises at least one of the following time periods: the fourth time period, the fifth time period, and the sixth time period; the target device comprises at least one of the following devices: the first terminal device, a second terminal device, and a second network device; the first network device provides a communications service for the second terminal device and the first terminal device; and the second network device is a neighboring network device of the first network device.

2. A data transmission method, comprising:
sending first signaling to a first terminal device in a first time period in a first time unit, wherein the first signaling indicates that a first network device receives first uplink data in a second time period in the first time unit;
determining a third time period from the first time unit, wherein a start point of the third time period is an end time of the first time period, and an end point of the third time period is a start time of the second time period; and
performing at least one of the following operations:
sending second signaling to a target device, wherein the second signaling indicates that the first network device sends a first target signal in a fourth time period in the third time period;
sending third signaling to a target device, wherein the third signaling indicates that the first network device receives, in a fifth time period in the third time period, a second target signal sent by the target device; or
sending fourth signaling to a target device, wherein the fourth signaling indicates that the first network device does not send any signal in a sixth time period in the third time period, and that the first network device does not configure a terminal device served by the first network device to send any signal in the sixth time period; wherein
the third time period comprises at least one of the following time periods: the fourth time period, the fifth time period, and the sixth time period; the target device comprises at least one of the following devices: the first terminal device, a second terminal device, and a second network device; the first network device provides a communications service for the second terminal device and the first terminal device; and the second network device is a neighboring network device of the first network device.

3. The method according to claim 1, wherein the determining a third time period from the first time unit comprises:
determining the third time period based on a downlink processing time period for processing the first downlink data by the first terminal device.

4. The method according to claim 2, wherein the determining a third time period from the first time unit comprises:
determining the third time period based on an uplink processing time period for processing the first uplink data by the first terminal device.

5. The method according to claim 3 or 4, wherein the first time unit comprises L symbols, the end time of the first time period is a k^{th} symbol in the L symbols, and the start time of the second time period is a j^{th} symbol in the L symbols; and the third time period comprises all symbols from a (k + 1)^{th} symbol to a (j - 1)^{th} symbol in the L symbols; and
the method further comprises:
when the fourth time period comprises the (k + 1)^{th} symbol to a (k + X)^{th} symbol, sending a first target signal to the target device in the (k + 1)^{th} symbol to the (k + X)^{th} symbol;
when the fifth time period comprises a (j - Y)^{th} symbol to the (j - 1)^{th} symbol, receiving, in the (j - Y)^{th} symbol to the (j - 1)^{th} symbol, a second target signal sent by the target device; and/or
when the sixth time period comprises a (k + X + 1)^{th} symbol to a (j - Y - 1)^{th} symbol, skipping transmitting a signal in the (k + X + 1)^{th} symbol to the (j - Y - 1)^{th} symbol, and skipping configuring, by the first network device, a terminal device served by the first network device to send any signal in the (k + X + 1)^{th} symbol to the (j - Y - 1)^{th} symbol; wherein
L, k, j, X, and Y all are non-negative integers, and j is greater than k.

6. The method according to claim 5, wherein the downlink processing time period is N1 symbols, and (j - k - 1) is greater than N1; or
the uplink processing time period is N2 symbols, and (j - k - 1) is greater than N2.

7. The method according to claim 6, wherein X is equal to N1;
Y is equal to N1;
X is equal to N2; or
Y is equal to N2.

8. The method according to claim 1 or 2, wherein the first signaling comprises: physical layer control signaling, semi-persistent scheduling SPS signaling, media access control MAC layer signaling, or higher layer signaling;
the second signaling comprises physical layer control signaling, SPS signaling, MAC layer signaling, or higher layer signaling;
the third signaling comprises physical layer control signaling, SPS signaling, MAC layer signaling, or higher layer signaling; or
the fourth signaling comprises physical layer control signaling, SPS signaling, MAC layer signaling, higher layer signaling, or interface signaling between base stations.

9. The method according to any one of claims 1 to 8, wherein the method further comprises:
separately obtaining a parameter of a downlink control channel used to carry the first signaling, a parameter of a downlink shared channel used to carry the first downlink data, and a parameter of an uplink channel used to carry the feedback signal; and
when the first time period, the second time period, the third time period, the fourth time period, the fifth time period, and the sixth time period are counted in a form of orthogonal frequency division multiplexing OFDM symbols, determining duration of a single symbol that is in the first time unit, based on at least one of the following parameters: the parameter of the downlink control channel used to carry the first signaling, the parameter of the downlink shared channel used to carry the first downlink data, the parameter of the uplink channel used to carry the feedback signal, or a predefined reference parameter.

10. The method according to claim 9, wherein the determining duration of a single symbol that is in the first time unit, based on at least one of the following parameters: the parameter of the downlink control channel used to carry the first signaling, the parameter of the downlink shared channel used to carry the first downlink data, the parameter of the uplink channel used to carry the feedback signal, or a predefined reference parameter, comprises:
when the parameter of the downlink control channel, the parameter of the downlink shared channel, and the parameter of the uplink channel comprise a same subcarrier spacing, using duration of an orthogonal frequency division multiplexing OFDM symbol corresponding to the same subcarrier spacing as the duration of the single symbol in the first time unit;
when the parameter of the downlink shared channel and the parameter of the uplink channel comprise different subcarrier spacings, determining a maximum subcarrier spacing from the parameter of the downlink shared channel and the parameter of the uplink channel, and using duration of an OFDM symbol corresponding to the maximum subcarrier spacing as the duration of the single symbol in the first time unit;
when the parameter of the downlink shared channel and the parameter of the uplink channel comprise different subcarrier spacings, using duration of an OFDM symbol corresponding to a subcarrier spacing of the downlink shared channel as the duration of the single symbol in the first time unit;
when the parameter of the downlink shared channel and the parameter of the uplink channel comprise different subcarrier spacings, using an OFDM symbol corresponding to the reference parameter as the duration of the single symbol in the first time unit; or
when the parameter of the downlink shared channel and the parameter of the uplink channel comprise different subcarrier spacings, using duration of an OFDM symbol corresponding to one subcarrier spacing in the parameter of the uplink channel as the duration of the single symbol in the first time unit.

11. The method according to any one of claims 1 to 8, wherein the first target signal comprises: a channel state information reference signal CSI-RS used for beam management, a CSI-RS used for channel quality feedback, a CSI-RS used for mobility management, a reference signal used for phase tracking, a reference signal used for time synchronization, and a reference signal used for frequency synchronization.

12. The method according to any one of claims 1 to 8, wherein the first target signal comprises: second downlink data sent to the second terminal device or third downlink data that is sent to the first terminal device and for which feedback does not need to be performed in the first time unit.

13. The method according to any one of claims 1 to 8, wherein the second target signal comprises: an uplink signal that is sent by the target device and that is different from the feedback signal, or another uplink signal that is sent by the target device and that is different from the first uplink data.

14. The method according to any one of claims 1 to 13, wherein the method further comprises:
when the first target signal is a CSI-RS, receiving, in a seventh time period in a second time unit, channel quality feedback information from the target device in response to the CSI-RS, wherein the second time unit is a time unit that is after the first time unit and that comprises uplink and downlink switching, and the seventh time period is a time period that is in the second time unit and that is before an uplink feedback signal is sent.

15. A data transmission method, comprising:
determining a first time unit used to receive first downlink data;
receiving first signaling sent by a first network device, wherein the first signaling indicates that a first terminal device receives first downlink data in a first time period in the first time unit, and sends a feedback signal in a second time period in the first time unit, wherein the feedback signal is a feedback signal sent by the first terminal device in response to a status of receiving the first downlink data; and
determining a third time period from the first time unit, wherein a start point of the third time period is an end time of the first time period, and an end point of the third time period is a start time of the second time period; and
the third time period is greater than or equal to a downlink processing time period for processing the first downlink data by the first terminal device.

16. A data transmission method, comprising:
determining a first time unit used to send uplink data;
receiving, in a first time period in the first time unit, first signaling sent by a first network device, wherein the first signaling indicates that a first terminal device sends first uplink data in a second time period in the first time unit; and
determining a third time period from the first time unit, wherein a start point of the third time period is an end time of the first time period, and an end point of the third time period is a start time of the second time period; and
the third time period is greater than or equal to an uplink processing time period for processing the first uplink data by the first terminal device.

17. The method according to claim 15 or 16, wherein the first time unit comprises L symbols, the end time of the first time period is a k^{th} symbol in the L symbols, and the start time of the second time period is a j^{th} symbol in the L symbols; and the third time period comprises all symbols from a (k + 1)^{th} symbol to a (j - 1)^{th} symbol in the L symbols; and
L, k, and j all are non-negative integers, and j is greater than k.

18. A data transmission method, comprising:
determining a third time period from a first time unit, wherein the third time period is a period of time in the first time period; and
performing at least one of the following operations:
receiving second signaling sent by the first network device, and determining, based on the second signaling, that the terminal device receives a first target signal in a fourth time period in the third time period;
receiving third signaling sent by the first network device, and determining, based on the third signaling, that the terminal device receives a second target signal in a fifth time period in the third time period; or
receiving fourth signaling sent by the first network device, and determining, based on the fourth signaling, that the first network device does not transmit a signal in a sixth time period in the third time period, and that the first network device does not configure a terminal device served by the first network device to send any signal in the sixth time period in the third time period; wherein
the third time period comprises at least one of the following time periods: the fourth time period, the fifth time period, and the sixth time period.

19. The method according to claim 18, wherein the first time unit comprises L symbols, and the third time period comprises all symbols from a (k + 1)^{th} symbol to a (j - 1)^{th} symbol in the L symbols; and
the method further comprises:
when the fourth time period comprises the (k + 1)^{th} symbol to a (k + X)^{th} symbol, receiving, in the (k + 1)^{th} symbol to the (k + X)^{th} symbol, a first target signal sent by the first network device; and/or
when the fifth time period comprises a (j - Y)^{th} symbol to the (j - 1)^{th} symbol, sending a second target signal to the first network device in the (j - Y)^{th} symbol to the (j - 1)^{th} symbol; wherein
L, k, j, X, and Y all are non-negative integers, and j is greater than k.

20. A data transmission method, comprising:
receiving fourth signaling sent by a first network device;
determining, based on the fourth signaling, that the first network device does not send any signal in a sixth time period in a first time unit, and that the first network device does not configure a terminal device served by the first network device to send any signal in the fourth time period; and
performing channel state measurement or data transmission in all or some time periods in the sixth time period.

21. The method according to claim 20, wherein the first time unit comprises L symbols, and the sixth time period comprises all symbols from a (k + 1)^{th} symbol to a (j - 1)^{th} symbol in the L symbols; and
the determining, based on the fourth signaling, that the first network device does not send any signal in a sixth time period in a first time unit, and that the first network device does not configure a terminal device served by the first network device to send any signal in the fourth time period, comprises:
when the sixth time period comprises a (k + X + 1)^{th} symbol to a (j - Y - 1)^{th} symbol, determining that the first network device does not transmit any signal in the (k + X + 1)^{th} symbol to the (j - Y - 1)^{th} symbol, and that the first network device does not configure a terminal device served by the first network device to send any signal in the (k + X + 1)^{th} symbol to the (j - Y - 1)^{th} symbol; wherein
L, k, j, X, and Y all are non-negative integers, and j is greater than k.

22. A network device, wherein the network device is specifically a first network device, and the first network device comprises:
a time period determining module, configured to: determine to send first downlink data to a first terminal device in a first time period in a first time unit, and receive, in a second time period in the first time unit, a feedback signal sent by the first terminal device in response to a status of receiving the first downlink data; and
a sending module, configured to: send first signaling to the first terminal device, wherein the first signaling is used to indicate that the first network device sends the first downlink data in the first time period in the first time unit, and receives, in the second time period in the first time unit, the feedback signal sent by the first terminal in response to the first downlink data; wherein
the time period determining module is further configured to determine a third time period from the first time unit, wherein a start point of the third time period is an end time of the first time period, and an end point of the third time period is a start time of the second time period; and
the sending module is further configured to perform at least one of the following operations:
sending second signaling to a target device, wherein the second signaling indicates that the first network device sends a first target signal in a fourth time period in the third time period;
sending third signaling to a target device, wherein the third signaling indicates that the first network device receives, in a fifth time period in the third time period, a second target signal sent by the target device; or
sending fourth signaling to a target device, wherein the fourth signaling indicates that the first network device does not send any signal in a sixth time period in the third time period, and that the first network device does not configure a terminal device served by the first network device to send any signal in the fourth time period; wherein
the third time period comprises at least one of the following time periods: the fourth time period, the fifth time period, and the sixth time period; the target device comprises at least one of the following devices: the first terminal device, a second terminal device, and a second network device; the first network device provides a communications service for the second terminal device and the first terminal device; and the second network device is a neighboring network device of the first network device.

23. A network device, wherein the network device is specifically a first network device, and the first network device comprises:
a sending module, configured to send first signaling to a first terminal device in a first time period in a first time unit, wherein the first signaling indicates that the first network device receives first uplink data in a second time period in the first time unit; and
a time period determining module, configured to determine a third time period from the first time unit, wherein a start point of the third time period is an end time of the first time period, and an end point of the third time period is a start time of the second time period; wherein
the sending module is further configured to perform at least one of the following operations:
sending second signaling to a target device, wherein the second signaling indicates that the first network device sends a first target signal in a fourth time period in the third time period;
sending third signaling to a target device, wherein the third signaling indicates that the first network device receives, in a fifth time period in the third time period, a second target signal sent by the target device; or
sending fourth signaling to a target device, wherein the fourth signaling indicates that the first network device does not send any signal in a sixth time period in the third time period, and that the first network device does not configure a terminal device served by the first network device to send any signal in the sixth time period; wherein
the third time period comprises at least one of the following time periods: the fourth time period, the fifth time period, and the sixth time period; the target device comprises at least one of the following devices: the first terminal device, a second terminal device, and a second network device; the first network device provides a communications service for the second terminal device and the first terminal device; and the second network device is a neighboring network device of the first network device.

24. The network device according to claim 22, wherein the time period determining module is specifically configured to determine a third time period based on a downlink processing time period for processing the first downlink data by the first terminal device.

25. The network device according to claim 23, wherein the time period determining module is specifically configured to determine a third time period based on an uplink processing time period for processing the first uplink data by the first terminal device.

26. The network device according to claim 23 or 24, wherein the first time unit comprises L symbols, the end time of the first time period is a k^{th} symbol in the L symbols, and the start time of the second time period is a j^{th} symbol in the L symbols; and the third time period comprises all symbols from a (k + 1)^{th} symbol to a (j - 1)^{th} symbol in the L symbols; and
the first network device further comprises a first receiving module and a silence module; wherein
the sending module is further configured to: when the fourth time period comprises the (k + 1)^{th} symbol to a (k + X)^{th} symbol, send the first target signal to the target device in the (k + 1)^{th} symbol to the (k + X)^{th} symbol;
the first receiving module is configured to: when the fifth time period comprises a (j - Y)^{th} symbol to the (j - 1)^{th} symbol, receive, in the (j - Y)^{th} symbol to the (j - 1)^{th} symbol, a second target signal sent by the target device, and/or
the silence module is configured to: when the sixth time period comprises a (k + X + 1)^{th} symbol to a (j - Y - 1)^{th} symbol, determine that the first network device does not transmit any signal in the (k + X + 1)^{th} symbol to the (j - Y - 1)^{th} symbol, and that the first network device does not configure a terminal device served by the first network device to send any signal in the (k + X + 1)^{th} symbol to the (j - Y - 1)^{th} symbol; wherein
L, k, j, X, and Y all are non-negative integers, and j is greater than k.

27. The network device according to claim 26, wherein the downlink processing time period is N1 symbols, and (j - k - 1) is greater than N1; or
the uplink processing time period is N2 symbols, and (j - k - 1) is greater than N2.

28. The network device according to claim 27, wherein X is equal to N1;
Y is equal to N1;
X is equal to N2; or
Y is equal to N2.

29. The network device according to claim 22 or 23, wherein the first signaling comprises: physical layer control signaling, semi-persistent scheduling SPS signaling, media access control MAC layer signaling, or higher layer signaling; or
the second signaling comprises physical layer control signaling, SPS signaling, MAC layer signaling, or higher layer signaling;
the third signaling comprises physical layer control signaling, SPS signaling, MAC layer signaling, or higher layer signaling; or
the fourth signaling comprises physical layer control signaling, SPS signaling, MAC layer signaling, higher layer signaling, or interface signaling between base stations.

30. The network device according to claims 22 to 29, wherein the first network device further comprises:
a symbol duration determining module, configured to: separately obtain a parameter of a downlink control channel used to carry the first signaling, a parameter of a downlink shared channel used to carry the first downlink data, and a parameter of an uplink channel used to carry the feedback signal; and when the first time period, the second time period, the third time period, the fourth time period, the fifth time period, and the sixth time period are counted in a form of orthogonal frequency division multiplexing OFDM symbols, determine duration of a single symbol that is in the first time unit, based on at least one of the following parameters: the parameter of the downlink control channel used to carry the first signaling, the parameter of the downlink shared channel used to carry the first downlink data, the parameter of the uplink channel used to carry the feedback signal, or a predefined reference parameter.

31. The network device according to claim 30, wherein the symbol duration determining module is specifically configured to: when the parameter of the downlink control channel, the parameter of the downlink shared channel, and the parameter of the uplink channel comprise a same subcarrier spacing, use duration of an orthogonal frequency division multiplexing OFDM symbol corresponding to the same subcarrier spacing as the duration of the single symbol in the first time unit; when the parameter of the downlink shared channel and the parameter of the uplink channel comprise different subcarrier spacings, determine a maximum subcarrier spacing from the parameter of the downlink shared channel and the parameter of the uplink channel, and use, by the first network device, duration of an OFDM symbol corresponding to the maximum subcarrier spacing as the duration of the single symbol in the first time unit; when the parameter of the downlink shared channel and the parameter of the uplink channel comprise different subcarrier spacings, use duration of an OFDM symbol corresponding to a subcarrier spacing of the downlink shared channel as the duration of the single symbol in the first time unit; when the parameter of the downlink shared channel and the parameter of the uplink channel comprise different subcarrier spacings, use an OFDM symbol corresponding to the reference parameter as the duration of the single symbol in the first time unit; or when the parameter of the downlink shared channel and the parameter of the uplink channel comprise different subcarrier spacings, use duration of an OFDM symbol corresponding to one subcarrier spacing in the parameter of the uplink channel as the duration of the single symbol in the first time unit.

32. The network device according to any one of claims 22 to 29, wherein the first target signal comprises: a channel state information reference signal CSI-RS used for beam management, a CSI-RS used for channel quality feedback, a CSI-RS used for mobility management, a reference signal used for phase tracking, a reference signal used for time synchronization, and a reference signal used for frequency synchronization.

33. The network device according to any one of claims 22 to 29, wherein the first target signal comprises second downlink data sent to the second terminal device or third downlink data that is sent to the first terminal device and for which feedback does not need to be performed in the first time unit.

34. The network device according to any one of claims 22 to 29, wherein the second target signal comprises: an uplink signal that is sent by the target device and that is different from the feedback signal, or another uplink signal that is sent by the target device and that is different from the first uplink data.

35. The network device according to any one of claims 22 to 34, wherein the first network device further comprises a second receiving module, wherein
the second receiving module is further configured to: when the first target signal is a CSI-RS, receive, in a seventh time period in a second time unit, channel quality feedback information from the target device in response to the CSI-RS, wherein the second time unit is a time unit that is after the first time unit and that comprises uplink and downlink switching, and the seventh time period is a time period that is in a second time unit and that is before an uplink feedback signal is sent.

36. A terminal device, wherein the terminal device is specifically a first terminal device, and the first terminal device comprises:
a determining module, configured to determine a first time unit used to receive first downlink data; and
a receiving module, configured to receive first signaling sent by a first network device, wherein the first signaling indicates that the first terminal receives, in a first time period in a first time unit, first downlink data sent by the first network device, and sends, in a second time period in the first time unit, a feedback signal in response to the first downlink data; wherein
the determining module is configured to determine a third time period from the first time unit, wherein a start point of the third time period is an end time of the first time period, and an end point of the third time period is a start time of the second time period; and
the third time period is greater than or equal to a downlink processing time period for processing the first downlink data by the first terminal device.

37. A terminal device, wherein the terminal device is specifically a first terminal device, and the first terminal device comprises:
a determining module, configured to determine a first time unit used to receive uplink data; and
a sending module, configured to receive, in a first time period in a first time unit, first signaling sent by a first terminal device, wherein the first signaling indicates that the first terminal device sends first uplink data in a second time period in the first time unit; wherein
the determining module is further configured to determine a third time period from the first time unit, wherein a start point of the third time period is an end time of the first time period, and an end point of the third time period is a start time of the second time period; and
the third time period is greater than or equal to an uplink processing time period for processing the first uplink data by the first terminal device.

38. The terminal device according to claim 37, wherein the first time unit comprises L symbols, the end time of the first time period is a k^{th} symbol in the L symbols, and the start time of the second time period is a j^{th} symbol in the L symbols; and the third time period comprises all symbols from a (k + 1)^{th} symbol to a (j - 1)^{th} symbol in the L symbols; and
L, k, and j all are non-negative integers, and j is greater than k.

39. A terminal device, wherein the terminal device comprises:
a determining module, configured to determine a third time period in a first time unit, wherein the third time period is a period of time in the first time unit; and
a first receiving module, configured to: receive second signaling sent by a first network device, and determine, based on the second signaling, that the first network device sends a first target signal in a fourth time period in the third time period;
a second receiving module, configured to: receive third signaling sent by the first network device, and determine, based on the third signaling, that the terminal device sends a second target signal in a fifth time period in the third time period; or
a third receiving module, configured to: receive fourth signaling sent by the first network device, and determine, based on the fourth signaling, that the first network device does not transmit a signal in a sixth time period in the third time period; wherein
the third time period comprises at least one of the following time periods: the fourth time period, the fifth time period, and the sixth time period.

40. The terminal device according to claim 39, wherein the first time unit comprises L symbols, and the third time period comprises all symbols from a (k + 1)^{th} symbol to a (j - 1)^{th} symbol in the L symbols; and
the terminal device further comprises a fourth receiving module and a sending module, wherein
the fourth receiving module is configured to: when the fourth time period comprises the (k + 1)^{th} symbol to a (k + X)^{th} symbol, receive, in the (k + 1)^{th} symbol to the (k + X)^{th} symbol, the first target signal sent by the first network device; and
the sending module is configured to: when the fifth time period comprises a (j - Y)^{th} symbol to the (j - 1)^{th} symbol, send the second target signal to the first network device in the (j - Y)^{th} symbol to the (j - 1)^{th} symbol, wherein
L, k, j, X, and Y all are non-negative integers, and j is greater than k.

41. A network device, wherein the network device is specifically a second network device, and the second network device comprises:
a receiving module, configured to receive fourth signaling sent by a first network device;
a determining module, configured to determine, based on the fourth signaling, that the first network device does not send any signal in a sixth time period in the first time period, and that the first network device does not configure a terminal device served by the first network device to send any signal in the fourth time period; and
a processing module, configured to perform channel state measurement or data transmission in all or some time periods in the sixth time period.

42. The network device according to claim 41, wherein the first time unit comprises L symbols, and the sixth time period comprises all symbols from a (k + 1)^{th} symbol to a (j - 1)^{th} symbol in the L symbols; and
the determining module is specifically configured to: when the sixth time period comprises a (k + X + 1)^{th} symbol to a (j - Y - 1)^{th} symbol, determine that the first network device does not transmit any signal in the (k + X + 1)^{th} symbol to the (j - Y - 1)^{th} symbol, and that the first network device does not configure a terminal device served by the first network device to send any signal in the (k + X + 1)^{th} symbol to the (j - Y - 1)^{th} symbol; wherein
L, k, j, X, and Y all are non-negative integers, and j is greater than k.

43. A computer readable storage medium, configured to store a computer program, wherein the computer program comprises an instruction used to perform the method according to any one of claims 1 to 21.

44. A data transmission apparatus, wherein the apparatus comprises a processor and a storage medium, the storage medium stores an instruction, and when the instruction is run by the processor, the processor is enabled to perform the method according to any one of claims 1 to 21.
